# EUROPÄISCHE PATENTSCHRIFT

(11) **EP 3 261 805 B1**
(45) Veröffentlichungstag und Bekanntmachung des Hinweises auf die Patenterteilung: **23.01.2019**
(21) Anmeldenummer: 16707067.1
(22) Anmeldetag: 25.02.2016
(51) Int. Cl.: B25F 3/00

(54) **HANDWERKZEUGMASCHINE**
HAND-HELD POWER TOOL
MACHINE-OUTIL PORTATIVE

(30) Priorität: 25.02.2015 DE 102015203350; 24.02.2016 DE 102016202831
(43) Veröffentlichungstag der Anmeldung: 03.01.2018
(73) Patentinhaber: Robert Bosch GmbH, 70442 Stuttgart (DE)
(72) Erfinder: BRENNENSTUHL, Jens, 73095 Albershausen (DE); HOFFMANN-SUGLAND, Michael, 70771 Echterdingen (DE); MOCK, Stefan, 73630 Remshalden (DE)
(86) Internationale Anmeldenummer: PCT/EP2016/053913
(87) Internationale Veröffentlichungsnummer: WO 2016/135216

(56) Entgegenhaltungen:
- EP-A2- 2 338 644
- EP-A2- 2 745 992
- DE-A1- 10 125 418
- DE-A1-102012 007 958

## Beschreibung

Die vorliegende Erfindung betrifft eine Handwerkzeugmaschine nach dem Oberbegriff des Anspruchs 1 und einen Werkzeugvorsatz für eine Handwerkzeugmaschine nach dem Oberbegriff des Anspruchs 10 sowie ein Werkzeugsystem mit einer Handwerkzeugmaschine und einem Werkzeugvorsatz nach dem Oberbegriff des Anspruchs 23.

### Stand der Technik

Derartige Handwerkzeugmaschinen, wie zum Beispiel Akku-Bohrschrauber oder Bohrmaschinen, sind aus dem Stand der Technik bekannt. Um die Einsatzmöglichkeiten für eine Handwerkzeugmaschine, wie z.B. einen Schrauber oder Bohrschrauber, zu erhöhen, ist es ferner bekannt, einen Werkzeugvorsatz an der Handwerkzeugmaschine lösbar anzubringen. So sind aus dem Stand der Technik beispielsweise Winkelaufsätze bekannt, deren Ausgangswelle in einem Winkel zu der Antriebswelle der Handwerkzeugmaschine steht. Außerdem sind Exzenteraufsätze bekannt, bei denen die Ausgangswelle parallel zu der Antriebswelle der Handwerkzeugmaschine versetzt angeordnet ist.

Zum lösbaren Anbringen eines Werkzeugvorsatzes am Gehäuse einer Handwerkzeugmaschine sind im Stand der Technik unterschiedliche Befestigungsarten bekannt.

Die Patentschrift DE 101 09 956 B4 beschreibt eine Handwerkzeugmaschine mit auswechselbaren Werkzeugvorsätzen, welche mit einer Bajonettverbindung am Werkzeug befestigt werden. Nachteilig hierbei ist, dass keine Arretierung der Bajonettverbindung vorgenommen werden kann, so dass sich diese aufgrund von im Betrieb der Handwerkzeugmaschine auftretenden Vibrationen selbsttätig lösen kann. Dies kann zu Schäden am Werkzeugvorsatz und/oder der Handwerkzeugmaschine sowie zu Verletzungen eines Benutzers der Handwerkzeugmaschine führen. Ferner erweist es sich als nachteilig, dass im verriegelten Zustand der Bajonettverbindung keine eindeutige und reproduzierbare Winkelposition des Verriegelungselementes zum Werkzeuggehäuse gegeben ist, sodass eine Anzeige des verriegelten Zustands nicht eindeutig vorgenommen werden kann.

Die Gebrauchsmusterschrift DE 20 2013 102 832 U1 offenbart zwar eine Möglichkeit zur Arretierung der Verbindung eines Werkzeugvorsatzes an einem Getriebegehäuse einer Handwerkzeugmaschine, allerdings wird hier die axiale Verriegelung es Werkzeugvorsatzes mithilfe einer Kugel realisiert, die in eine umlaufende Nut in der Spindel der Werkzeugmaschine eingreift. Dies wiederum hat gegenüber der Realisierung mithilfe eines Bajonettverschlusses den Nachteil, dass in der Schnittstelle zwischen Werkzeugvorsatzes und Getriebegehäuse ein großes Kippspiel auftritt, welches unerwünscht ist.

Die Patentschrift DE 10 2013 213 804 A1 bzw. EP 2 745 992 A2 offenbart eine Handwerkzeugmaschine mit einer als Bajonettverbindung ausgebildeten Befestigungsschnittstelle zur Aufnahme eines Werkzeugvorsatzes, wobei die Befestigungsschnittstelle durch ein Sperrelement verriegelt werden kann. Auch bei dieser Lösung ist wiederum nachteilig, dass keine eindeutige und reproduzierbare Winkelposition des Verriegelungselementes zum Getriebegehäuse gegeben ist, sodass eine Anzeige des verriegelten Zustands nicht eindeutig vorgenommen werden kann.

### Offenbarung der Erfindung

Aufgabe der Erfindung ist es, die oben genannten Nachteile zu verbessern und einen neuen Werkzeugvorsatz zur Befestigung an einer Schnittstelle einer Handwerkzeugmaschine bereitzustellen, bei welchem die Schnittstelle zwischen Getriebegehäuse und Werkzeugvorsatz spielarm arretierbar ist, und bei welchem der Verriegelungszustand der Schnittstelle in einer eindeutigen Winkelposition dem Benutzer auf einfache und eindeutige Weise angezeigt wird.

Diese Aufgabe wird durch eine Handwerkzeugmaschine gemäß Anspruch 1 und einen Werkzeugvorsatz für eine Handwerkzeugmaschine nach Anspruch 10 sowie durch ein Werkzeugsystem nach Anspruch 23 gelöst. Vorteilhafte Ausgestaltungen, Varianten und Weiterbildungen der Erfindung sind den Unteransprüchen zu entnehmen.

Es ist vorgesehen, dass eine Handwerkzeugmaschine ein Getriebegehäuse mit einem Getriebe zur Übertragung eines von einem Antriebsmotor erzeugten Drehmomentes auf eine um eine Drehachse x rotierende Spindel, die eine axiale Richtung x definiert, umfasst, wobei das Getriebegehäuse derart mit einem Werkzeugvorsatz über ein gehäuseseitiges Schnittstellenelement austauschbar verbindbar ist, dass ein Drehmoment von der Spindel auf eine Eingangsspindel des Werkzeugvorsatzes übertragen wird. Das gehäuseseitige erste Schnittstellenelement weist einen Flanschring auf, wobei der Flanschring drehstarr mit dem Getriebegehäuse verbunden ist, und korrespondiert mit einem werkzeugvorsatzseitigen zweiten Schnittstellenelement, das einen Befestigungsring aufweist, der drehbar am Werkzeugvorsatz gelagert ist. Ferner ist der Befestigungsring mit dem Flanschring derart durch eine gekoppelte rotatorische und axiale Relativbewegung des Befestigungsringes gegenüber dem Flanschring in Eingriff zu bringen, dass der Befestigungsring und der Flanschring gemeinsam eine Bajonettverbindungseinrichtung bilden.

Vorzugsweise umfasst das werkzeugseitige zweite Schnittstellenelement des Weiteren einen Rastring, wobei die Bajonettverbindungseinrichtung durch ein Verdrehen des Befestigungsringes gegenüber dem Rastring arretierbar ist.

Es kommt demnach in der Schnittstelle zwischen Getriebegehäuse und Werkzeugvorsatz eine Bajonettverbindungseinrichtung zum Einsatz. Dadurch, dass bei einer Bajonettverbindungseinrichtung ein axiales Aneinander führen des gehäuseseitigen ersten Schnittstellenelements und des werkzeugvorsatzseitigen zweiten Schnittstellenelements erfolgt, weist die Schnittstelle ein sehr geringes Kippspiel auf. Durch die Anordnung eines Rastringes an dem werkzeugvorsatzseitigen zweiten Schnittstellenelement wird darüber hinaus die angestrebte Arretierung der Bajonettverbindungsanordnung erreicht.

Erfindungsgemäß weist der Flanschring zumindest eine angefaste Hinterschneidung auf, die sich in Umfangsrichtung des Flanschringes erstreckt und die eine variable Steigung aufweist, wobei bei der Herstellung der Bajonettverbindungseinrichtung wenigstens ein korrespondierendes Hintergreifungselement am Befestigungsring nach Art einer Bajonettverbindung in die Hinterschneidung eingreift, wobei bei einer Aufbringung einer Verdrehung des Befestigungsrings das Hintergreifungselement derart entlang der Steigung der angefasten Hinterschneidung geführt wird, dass in einem ersten definierten Winkelbereich der Verdrehung eine axiale Bewegungskomponente des Befestigungsrings gegenüber dem Flanschring hervorgerufen wird. Durch die Variabilität der Steigung kann ein unterschiedliches Verhältnis zwischen Rotationsbewegung und axialer Bewegungskomponente erreicht werden.

In einer alternativen bevorzugten Ausführungsform weist der Befestigungsring zumindest eine angefaste zweite Hinterschneidung auf, wobei sich die zweite Hinterschneidung in Umfangsrichtung des Befestigungsringes erstreckt und die eine variable Steigung aufweist, wobei bei der Herstellung der Bajonettverbindungseinrichtung wenigstens ein korrespondierendes zweites Hintergreifungselement am Flanschring nach Art einer Bajonettverbindung in die zweite Hinterschneidung eingreift, wobei bei einer Aufbringung einer Verdrehung des Befestigungsrings das zweite Hintergreifungselement derart entlang der Steigung der angefasten zweite Hinterschneidung geführt wird, dass in einem ersten definierten Winkelbereich der Verdrehung eine axiale Bewegungskomponente des Befestigungsrings gegenüber dem Flanschring hervorgerufen wird.

Vorteilhafterweise ist die variable Steigung der angefasten Hinterschneidung derart ausgeführt, dass die am Befestigungsring aufgebrachte Verdrehung in einem zweiten definierten Winkelbereichs der Verdrehung keine axiale Bewegungskomponente des Befestigungsrings gegenüber dem Flanschring hervorruft. Bei einer angefasten Hinterschneidung mit konstanter Steigung, die für alle Verdrehwinkel eine axiale Bewegungskomponente bewirkt, tritt bei einem Winkel, der abhängig ist von den Fertigungstoleranzen verschiedener beteiligter Baugruppen, eine Verspannung des gehäuseseitigen ersten Schnittstellenelementes gegenüber dem werkzeugvorsatzseitigen zweiten Schnittstellenelement auf, welches prinzipiell erwünscht ist, da diese Verspannung der Schnittstelle Stabilität verleiht und Spiel aus der Schnittstelle nimmt. Nachteilig hierbei ist jedoch, dass es durch die genannten Fertigungstoleranzen nicht möglich ist, den Verdrehwinkel, bei dem die Verspannung einsetzt, exakt festzulegen. Dies wiederum bedingt, dass die erwünschte Arretierung der Bajonettverbindungseinrichtung nicht in einer eindeutigen und reproduzierbaren Winkelposition des Verriegelungselementes gegenüber dem Getriebegehäuse vorgenommen werden kann, da die Verspannung bei einem nicht vorgesehenen Verdrehwinkel so groß werden kann, dass ein weiteres Verdrehen in Richtung der vorgesehenen Arretierungsposition nicht mehr möglich ist.

Durch den hier vorgeschlagenen zweiten definierten Winkelbereich der Verdrehung, bei dem eine am Befestigungsring aufgebrachte Verdrehung keine axiale Bewegungskomponente des Befestigungsrings gegenüber dem Flanschring hervorruft, ist es möglich, das werkzeugvorsatzseitige zweite Schnittstellenelement gegenüber dem gehäuseseitigen ersten Schnittstellenelement zu verdrehen, ohne die axiale Verspannung der beiden Bauteile zu erhöhen. Hierdurch kann eine definierte Winkelposition des Verriegelungselementes gegenüber dem Getriebegehäuse gewählt werden, in welcher auch die Arretierung der Bajonettverbindungseinrichtung vorgenommen werden kann.

Gemäß einer bevorzugten Ausgestaltung der Erfindung sind sowohl der Rastring als auch der Befestigungsring drehbar am Werkzeugvorsatz gelagert, und das gehäuseseitige erste Schnittstellenelement weist zumindest ein Element auf, welches beim Eingriff des Befestigungsringes mit dem Flanschring den Rastring gegenüber dem Flanschring verdrehsicher fixiert.

Bevorzugterweise weist der Rastring zumindest eine erste Ausnehmung auf, die mit zumindest einem korrespondierenden Rastelement des Befestigungsringes derart zusammenwirkt, dass bei Herstellen der Bajonettverbindungseinrichtung das Rastelement bei einem definierten Verdrehwinkel des Befestigungsringes gegenüber dem Rastring in die erste Ausnehmung einrastet, wodurch die Arretierung des Befestigungsringes gegenüber dem Rastring erreicht wird.

In einer vorteilhaften Ausführungsform weist der Rastring zumindest eine zweite Ausnehmung auf, die mit zumindest einem Rastelement des Befestigungsringes derart zusammenwirkt, dass bei Lösen der Bajonettverbindungseinrichtung das Rastelement bei einem definierten Verdrehwinkel des Befestigungsringes gegenüber dem Rastring in die zweite Ausnehmung einrastet, wodurch eine Verdrehsicherung des Befestigungsringes gegenüber dem Rastring erreicht wird, wenn das gehäuseseitige erste Schnittstellenelement und das werkzeugvorsatzseitige zweite Schnittstellenelement nicht miteinander in Eingriff stehen.

Dabei entspricht in einer bevorzugten Ausführungsform der zweite definierte Winkelbereich der Verdrehung einem Bereich, der sich vom Einrasten des Rastelements in die erste Ausnehmung bis zu einer Verdrehung des Befestigungsringes gegenüber dem Rastring um einen definierten Drehwinkel erstreckt, und der erste definierte Winkelbereich der Verdrehung den übrigen Verdrehwinkel des Befestigungsringes gegenüber dem Rastring bis zum Einrasten des Rastelements in die zweite Ausnehmung entspricht.

Vorteilhafterweise weist das gehäuseseitige erste Schnittstellenelement wenigstens ein Rippenelement auf, das mit wenigstens einer korrespondierenden Rastnase des werkzeugvorsatzseitigen zweiten Schnittstellenelements derart in Eingriff bringbar ist, dass bei Herstellung der Bajonettverbindungseinrichtung der Werkzeugvorsatz gegenüber dem Getriebegehäuse verdrehsicher fixiert ist. Hierdurch kann ein auf den Werkzeugvorsatz wirkendes Drehmoment, das beispielsweise aus einer exzentrischen oder gegenüber der Ausgangsspindel der Handwerkzeugmaschine geneigten Ausgangsspindel des Werkzeugvorsatzes resultieren kann, vom Getriebegehäuse aufgenommen werden.

Das eingangs genannte Problem wird auch gelöst durch einen Werkzeugvorsatz für eine Handwerkzeugmaschine mit den Merkmalen des Anspruchs 10, wobei der Werkzeugvorsatz derart mit der Handwerkzeugmaschine über ein werkzeugvorsatzseitiges Schnittstellenelement austauschbar verbindbar ist, dass ein Drehmoment von einer Spindel der Handwerkzeugmaschine auf eine Eingangsspindel des Werkzeugvorsatzes übertragen wird. Das werkzeugvorsatzseitige Schnittstellenelement weist einen Befestigungsring auf, der drehbar am Werkzeugvorsatz gelagert ist, wobei das werkzeugvorsatzseitige zweite Schnittstellenelement mit einem gehäuseseitigen ersten Schnittstellenelement verbindbar ist, wobei das gehäuseseitige erste Schnittstellenelement vorzugsweise einen Flanschring aufweist. Der Flanschring ist insbesondere drehstarr mit einem Getriebegehäuse der Handwerkzeugmaschine verbunden, wobei der Befestigungsring mit dem gehäuseseitigen Schnittstellenelement, insbesondere dem Flanschring, derart durch eine gekoppelte rotatorische und axiale Relativbewegung des Befestigungsringes gegenüber dem gehäuseseitigen Schnittstellenelement, insbesondere dem Flanschring, in Eingriff zu bringen ist, dass der Befestigungsring und das gehäuseseitige Schnittstellenelement, insbesondere der Flanschring, gemeinsam eine Bajonettverbindungseinrichtung bilden.

Vorzugsweise umfasst das werkzeugvorsatzseitige zweite Schnittstellenelement des weiteren einen Rastring, wobei die Bajonettverbindungseinrichtung durch ein Verdrehen des Befestigungsringes gegenüber dem Rastring arretierbar ist.

Dadurch, dass die Arretierung zwischen dem Befestigungsring und dem Rastring erfolgt, die beide Bestandteil des werkzeugvorsatzseitigen zweiten Schnittstellenelements sind, d.h. die beide an dem Werkzeugvorsatz angeordnet sind, ist für die Arretierung vollkommen unerheblich, wie der Werkzeugvorsatz gegenüber dem Getriebegehäuse orientiert ist. Hierdurch wird zusätzlich zu der einfachen Realisierung der Arretierung an sich der synergetische Effekt erzielt, dass die Arretierung der Bajonettverbindungseinrichtung dem Benutzer auf einfache und eindeutige Weise angezeigt werden kann.

Vorteilhafterweise erfolgt die Drehung des Befestigungsrings über einen Feststellring, der konzentrisch zum Befestigungsring am Werkzeugvorsatz gelagert ist und drehfest mit dem Befestigungsring verbunden ist. Neben seiner Funktion als Angriffspunkt für den Benutzer schirmt der Feststellring auch den Befestigungsring nach außen hin ab und verhindert das Eindringen von Schmutz etc. in das werkzeugvorsatzseitige zweite Schnittstellenelement.

Bevorzugterweise ist der Befestigungsring an dem Werkzeugvorsatz in axialer Richtung federelastisch gelagert, sodass bei Herstellen der Bajonettverbindungseinrichtung und der damit verbundenen axialen Relativbewegung zwischen dem Befestigungsring und dem Flanschring das gehäuseseitige erste Schnittstellenelement und das werkzeugvorsatzseitige zweite Schnittstellenelement axial gegeneinander vorgespannt werden. Wie bereits oben erwähnt, ist eine gewisse axiale Verspannung der Schnittstelle erwünscht, da sie hierdurch weniger Spiel aufweist. Die federelastische Lagerung des Befestigungsrings wird insbesondere durch zumindest ein Federelement bewirkt.

In einer bevorzugten Ausführungsform erfolgt die federelastische Lagerung durch ein Elastomerelement und/oder eine Feder, wobei vorteilhafterweise eine Rastnase des werkzeugvorsatzseitigen zweiten Schnittstellenelements derart durch ein Federelement mit dem Befestigungsring verbunden ist, dass beim Herstellen der Bajonettverbindungseinrichtung eine Vorspannung der Rastnase gegen das erste Schnittstellenelement erfolgt. Das Federelement kann jedoch auch eine Spiralfeder sein, die als Druck- oder Zugfeder ausgebildet ist.

Vorteilhafterweise ist der Werkzeugvorsatz als Bohrfutter-Werkzeughalter, als Rechtwinkel-Werkzeughalter, als Exzenter-Werkzeughalter, als Bithaltervorsatz, als Drehschlagschraubvorsatz, als Schlagbohrvorsatz, als Bohrhammervorsatz oder als Drehmomentenvorsatz ausgebildet. Alternativ kann der Werkzeugvorsatz auch eine andere, dem Fachmann als sinnvoll erscheinende Funktion aufweisen und zum Beispiel einen Gebläsevorsatz, einen Kartuschenpressvorsatz oder einen Rohrverpressvorsatz zu bilden.

In einer Ausführungsform ist am Werkzeugvorsatz eine Anzeigeeinrichtung vorgesehen, welche unabhängig vom verwendeten Werkzeugvorsatz , unabhängig von der Winkelposition des Werkzeugvorsatz zum Getriebegehäuse, und unabhängig von der Winkelposition der Anzeigeeinrichtung des Werkzeugvorsatz zum Rest des Werkzeugvorsatz den entriegelten und den verriegelten Verriegelungszustand der Bajonettverbindungseinrichtung anzeigt, wobei bevorzugterweise die Anzeigeeinrichtung eine erste Anzeigeaussparung und eine zweite Anzeigeaussparung im Feststellring umfasst sowie ein erstes Symbol auf dem Rastring, welches ausschließlich dann zentriert durch die erste Anzeigeaussparung sichtbar ist, wenn das Rastelement des Befestigungsringes in die erste Ausnehmung eingerastet ist, und welches ausschließlich dann zentriert durch die zweite Anzeigeaussparung sichtbar ist, wenn das Rastelement des Befestigungsringes in die zweite Ausnehmung eingerastet ist. Hierdurch erhält der Benutzer schnell Auskunft über den Verriegelungszustand der Verbindung.

In einer alternativen bevorzugten Ausführungsform umfasst die Anzeigeeinrichtung eine erste Anzeigeaussparung im Feststellring sowie ein erstes Symbol und ein zweites Symbol auf dem Rastring , wobei das erste Symbol ausschließlich dann zentriert durch die erste Anzeigeaussparung sichtbar ist, wenn das Rastelement des Befestigungsringes in die erste Ausnehmung eingerastet ist, und wobei das zweite Symbol ausschließlich dann zentriert durch die Anzeigeaussparung sichtbar ist, wenn das Rastelement des Befestigungsringes in die zweite Ausnehmung eingerastet ist.

Vorteilhafterweise umfasst der Werkzeugvorsatz zusätzlich zum werkzeugvorsatzseitigen zweiten Schnittstellenelement auch eine nach Art des gehäuseseitigen ersten Schnittstellenelementes der Handwerkzeugmaschine ausgebildete Zusatzschnittstelle, so dass an der Zusatzschnittstelle ein weiterer Werkzeugvorsatz adaptiert werden kann und somit der Betrieb mehrerer, hintereinander angeordneter Werkzeugvorsätze am Getriebegehäuse möglich ist, die miteinander durch Bajonettverbindungseinrichtungen verbunden sind.

In einer besonders bevorzugten Ausführungsform ist des Weiteren eine Eingangslagerbuchse am Werkzeugvorsatz vorgesehen ist, wobei die Eingangslagerbuchse an ihrem Innenumfang die Eingangsspindel des Werkzeugvorsatzes aufnimmt und entlang ihres Außenumfangs abschnittsweise sowohl von einer Zentrierhülse der Eingangsspindel als auch von Abschnitten des Gehäuses des Werkzeugvorsatzes umgriffen wird, sodass eine gleichzeitige Zentrierung des Gehäuses des Werkzeugvorsatzes und des Schnittstellenelements durch die Eingangslagerbuchse erfolgt.

Das Eingangs genannte Problem wird auch gelöst durch ein Werkzeugsystem mit einer Handwerkzeugmaschine und einem Werkzeugvorsatz, wobei die Handwerkzeugmaschine ein Getriebegehäuse mit einem Getriebe zur Übertragung eines von einem Antriebsmotor erzeugten Drehmomentes auf eine um eine Drehachse rotierende Spindel umfasst, wobei die Spindel eine axiale Richtung definiert. Das Getriebegehäuse ist derart mit dem Werkzeugvorsatz über eine Schnittstelle austauschbar verbindbar, dass ein Drehmoment von der Spindel auf eine Eingangsspindel des Werkzeugvorsatzes übertragen wird. Die Schnittstelle weist ein gehäuseseitiges erstes Schnittstellenelement mit einem Flanschring auf, wobei der Flanschring drehstarr mit dem Getriebegehäuse verbunden ist, und wobei das gehäuseseitige erste Schnittstellenelement mit einem werkzeugvorsatzseitigen zweiten Schnittstellenelement korrespondiert, das einen Befestigungsring aufweist, der drehbar am Werkzeugvorsatz gelagert ist. Der Befestigungsring ist mit dem Flanschring derart durch eine gekoppelte rotatorische und axiale Relativbewegung des Befestigungsringes gegenüber dem Flanschring in Eingriff zu bringen, dass der Befestigungsring und der Flanschring gemeinsam eine Bajonettverbindungseinrichtung bilden. Es ist vorgesehen, dass das zweite Schnittstellenelement des Weiteren einen Rastring umfasst, wobei die Bajonettverbindungseinrichtung durch ein Verdrehen des Befestigungsringes gegenüber dem Rastring arretierbar ist.

Dabei ist es besonders vorteilhafter, wenn die Handwerkzeugmaschine nach einem der Ansprüche 1 bis 9 und/oder der Werkzeugvorsatz nach einem der Ansprüche 10 bis 22 ausgebildet ist.

In einer weiteren Ausführungsform weist das gehäuseseitige erste Schnittstellenelement wenigstens ein Rippenelement auf, das mit wenigstens einer korrespondierenden Rastnase des zweiten Schnittstellenelements derart in Eingriff bringbar ist, dass bei Herstellung der Bajonettverbindungseinrichtung der Werkzeugvorsatz gegenüber dem Getriebegehäuse verdrehsicher fixiert ist.

Wie weiter oben beschrieben, kann so ein auf den Werkzeugvorsatz wirkendes Drehmoment, das beispielsweise aus einer exzentrischen oder gegenüber der Ausgangsspindel der Handwerkzeugmaschine geneigten Ausgangsspindel des Werkzeugvorsatzes resultieren kann, vom Getriebegehäuse aufgenommen werden.

Bevorzugterweise kann der Werkzeugvorsatz im arretierten Zustand der Bajonettverbindungseinrichtung gegen die Vorspannkraft eines Federelementes in axialer Richtung von dem Getriebegehäuse weggezogen werden, sodass der Eingriff zwischen der Rastnase und dem Rippenelement aufgehoben und eine Verdrehung des Werkzeugvorsatzes gegenüber dem Getriebegehäuse ermöglicht wird. So muss die Bajonettverbindungsvorrichtung nicht gelöst werden, um eine Verdrehung des Werkzeugvorsatzes gegenüber dem Getriebegehäuse zu ermöglichen, was bei bestimmten Werkzeugvorsätzen wie etwa einem Rechtwinkel-Werkzeughalter oder einem Exzenter-Werkzeughalter wünschenswert sein kann.

Generell sollen unter einer Handwerkzeugmaschine beispielsweise Stabschrauber, Schlagbohrmaschinen, Multifunktionswerkzeuge, Bohrschrauber, Akku-Bohrer, Akku-Schrauber und/ oder Akku-Bohrschrauber verstanden werden. Wobei die Handwerkzeugmaschine ein Getriebe zur Übertragung eines von einem Antriebsmotor erzeugten Drehmomentes auf eine Antriebswelle aufweist und auf den Werkzeugvorsatz verschiedenen Werkzeuge beispielsweise Bohrer, Bitaufsätze oder Bohrkronen verwendet werden können.

Unter Übertragung elektrischer Energie soll in diesem Zusammenhang insbesondere verstanden werden, dass die Handwerkzeugmaschine über eine Stromkabelanbindung an den Korpus und/oder über einen Akku im Gehäuse Energie an den Antriebsmotor weiterleitet.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand von bevorzugten Ausführungsbeispielen näher erläutert, wobei für gleiche Merkmale gleiche Bezugszeichen verwendet werden. Die Zeichnungen sind schematisch und zeigen:
- Fig. 1: beispielhaft eine Seitenansicht einer erfindungsgemäßen Handwerkzeugmaschine mit einem erfindungsgemäßen Werkzeugvorsatz;
- Fig. 2: eine Schnittansicht einer Handwerkzeugmaschine und eines an einer Schnittstelle befestigten Werkzeugvorsatzes in einer ersten Ausführungsform;
- Fig. 3: eine perspektivische Ansicht eines Flanschringes;
- Fig. 4: eine Schnittansicht einer Handwerkzeugmaschine und eines an der Schnittstelle befestigten Werkzeugvorsatzes in einer zweiten Ausführungsform;
- Fig. 5: eine Schnittansicht einer Handwerkzeugmaschine und eines an der Schnittstelle befestigten Werkzeugvorsatzes sowie eines an einer zweiten Schnittstelle befestigten zweiten Werkzeugvorsatzes in einer ersten Ausführungsform;
- Fig. 6: eine Seitenansicht einer Ansicht der Schnittstelle zwischen einer Handwerkzeugmaschine und einem Werkzeugvorsatz;
- Fig. 7: beispielhaft eine schematisch perspektivische Ansicht eines Feststellringes mit einem Rastring;
- Fig. 8: eine perspektivische Ansicht einer Handwerkzeugmaschine mit einem gehäuseseitigen ersten Schnittstellenelement der Schnittstelle;
- Fig. 9: eine perspektivische Ansicht eines Werkzeugvorsatzes mit einem werkzeugvorsatzseitigen zweiten Schnittstellenelement der ersten Schnittstelle;
- Fig. 10: eine perspektivische Ansicht eines Werkzeugvorsatzes mit einem zweiten Schnittstellenelement der Schnittstelle und einer Zusatzschnittstelle; und
- Fig. 11: eine perspektivische Ansicht eines Rastringes.

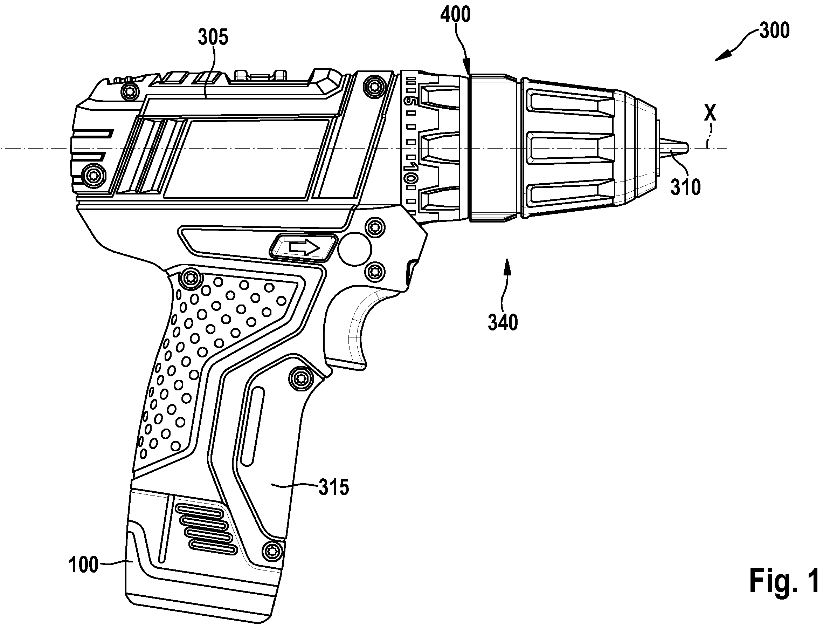

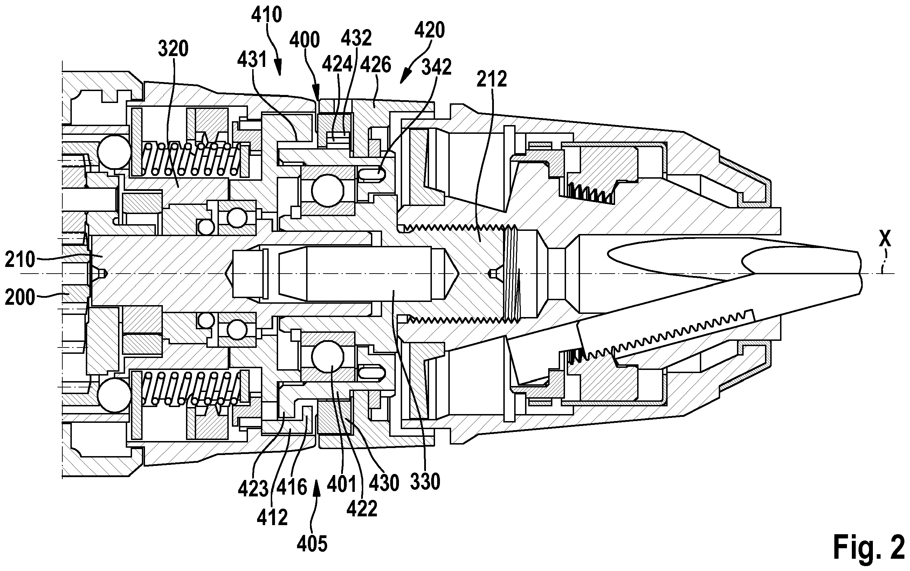

Die Figur 1 stellt ein als Handwerkzeugmaschine 300 ausgebildetes Elektrogerät dar. Gemäß der abgebildeten Ausführungsform ist die Handwerkzeugmaschine 300 zur netzunabhängigen Stromversorgung mechanisch und elektrisch mit einem Akkupack 100 verbindbar. Die Handwerkzeugmaschine umfasst einen Handgriff 315, an welchem der Akkupack 100 verriegelt angeordnet ist. In Figur 1 ist die Handwerkzeugmaschine 300 beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen Handwerkzeugmaschinen 300 Anwendung finden kann, welche mit elektrischer Energie betrieben werden. Die Handwerkzeugmaschine 300 weist einen Grundkörper 305 auf, der ein Getriebegehäuse 320 umfasst (Figur 2). Am Getriebegehäuse 320 ist über eine Schnittstelle 400 eine Werkzeugvorsatz 340 auswechselbar verbunden. In diesem Fall ist der Werkzeugvorsatz 340 als Bohrfutter-Werkzeughalter ausgeführt, der eine Werkzeugaufnahme 310 zur Aufnahme eines Bohrer- oder eines Schrauberbits umfasst.

In Figur 2 ist eine Schnittansicht der Handwerkzeugmaschine 300 im Bereich der Schnittstelle 400 dargestellt. Dargestellt ist der verriegelte Verriegelungszustand, in welchem das Getriebegehäuse 320 und der Werkzeugvorsatz 340 über die Schnittstelle 400 miteinander verbunden sind.

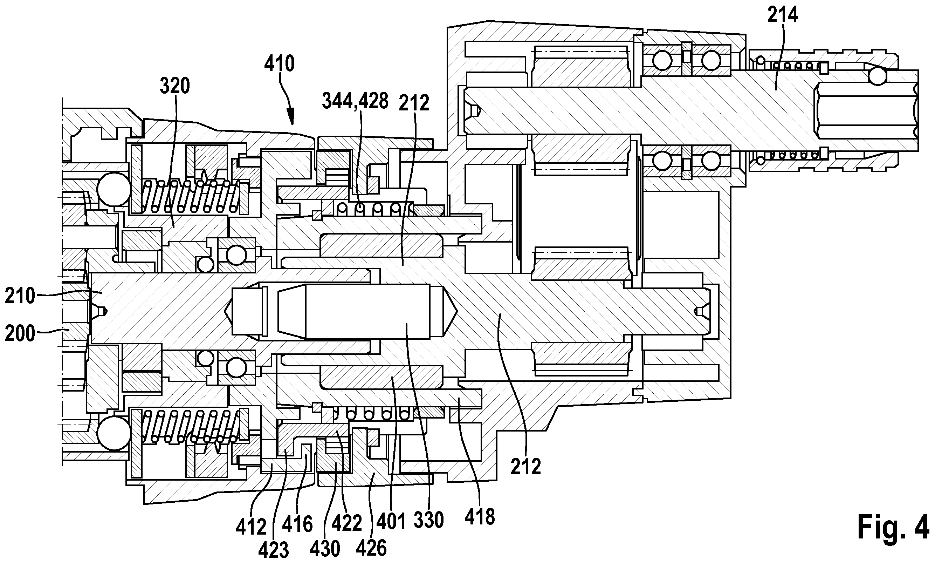

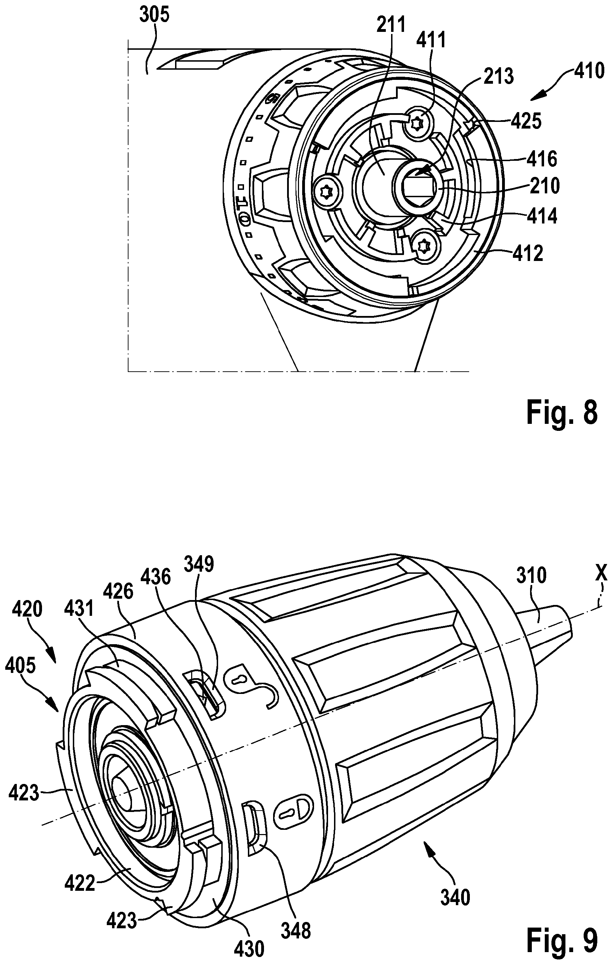

Dabei zeigt die Figur 2 einen Teil des Getriebes 200 der Handwerkzeugmaschine 300 sowie eine hiervon in einer axialen Richtung x ausgehende Spindel 210, die durch einen nicht dargestellten Antriebsmotor rotatorisch um die Werkzeugachse x angetrieben wird. Das freie Ende der Spindel 210 weist eine zylindrische Außengeometrie 211 und eine Werkzeugaufnahme 213 in Form einer Innensechskantaufnahme auf (Figur 8). Die Werkzeugaufnahme 213 ist dazu ausgebildet, ein Einsatzwerkzeug mit Außensechskantprofil, zum Beispiel ein Schrauberbit, aufzunehmen. Die Handwerkzeugmaschine 300 kann auf diese Weise auch ohne die Anbringung des Werkzeugvorsatzes 340 als eigenständige Handwerkzeugmaschine 300 verwendet werden. Das auf die Spindel 210 wirkende Drehmoment wird über einen geeigneten Adapter 330, beispielsweise einen Außensechskantadapter, auf eine Eingangsspindel 212 des Werkzeugvorsatzes 340 übertragen, um werkzeugvorsatzseitig den jeweiligen Mechanismus anzutreiben. Der Adapter 330 ist fest mit der Eingangsspindel 212 des Werkzeugvorsatzes 340 verbunden. Der Adapter 330 des Werkzeugvorsatzes 340 ist lösbar mit der Spindel 210 der Handwerkzeugmaschine 300 verbunden. Beim Anbringen des Werkzeugvorsatzes 340 an der Handwerkzeugmaschine 300 wird das freie Ende des Adapters 330 in die Werkzeugaufnahme 213 gesteckt. Die Drehmomentübertragung von der Handwerkzeugmaschine 300 auf den Werkzeugvorsatz 340 erfolgt über das jeweilige Sechskantprofil der Werkzeugaufnahme 213 und des Adapters 330. In dem dargestellten Fall überträgt die Eingangsspindel 212 die Rotation auf das Bohrfutter. Weitere Mechanismen werden weiter unten in Verbindung mit den Figuren 4, 5 und 10 beschrieben.

Es ist ferner zu erkennen, dass die Schnittstelle 400 ein gehäuseseitiges erstes Schnittstellenelement 410 mit einem Flanschring 412 aufweist, der drehstarr mit dem Getriebegehäuse 320 verbunden ist, sowie ein werkzeugvorsatzseitiges zweites Schnittstellenelement 420 mit einem Befestigungsring 422, der drehbar am Werkzeugvorsatz 340 gelagert ist. Das gehäuseseitige Schnittstellenelement 410 ist in der dargestellten Ausführungsform mit Hilfe von drei Befestigungselementen 411, zum Beispiel Befestigungsschrauben, drehfest mit dem Getriebegehäuse 320 verbunden. Das gehäuseseitige Schnittstellenelement 410 weist hierfür drei Durchgangsöffnungen 413 für die Aufnahme der Befestigungselemente 411 auf.

Die Drehung des Befestigungsrings 422 durch einen Benutzer erfolgt über einen Feststellring 426, der konzentrisch zum Befestigungsring 422 am Werkzeugvorsatz 340 gelagert und drehstarr mit dem Befestigungsring 422 verbunden ist.

Der Befestigungsring 422 und der Flanschring 412 stehen derart miteinander in Eingriff, dass sie gemeinsam eine Bajonettverbindungseinrichtung 405 bilden. Bajonettverbindungseinrichtungen an sich sind dem Fachmann geläufig und zeichnen sich dadurch aus, dass beim Eingriff der beiden Schnittstellenufer der Verbindung eine rotatorische Relativbewegung der Schnittstellenufer mit einer axialen Relativbewegung der Schnittstellenufer gekoppelt ist. In der dargestellten Ausführungsform bewirkt die Bajonettverbindungseinrichtung 405, dass beim Einschrauben des Befestigungsringes 422 in den Flanschring 412 das erste Schnittstellenelement 410 und das zweite Schnittstellenelement 420 in axialer Richtung aufeinander zu geführt werden.

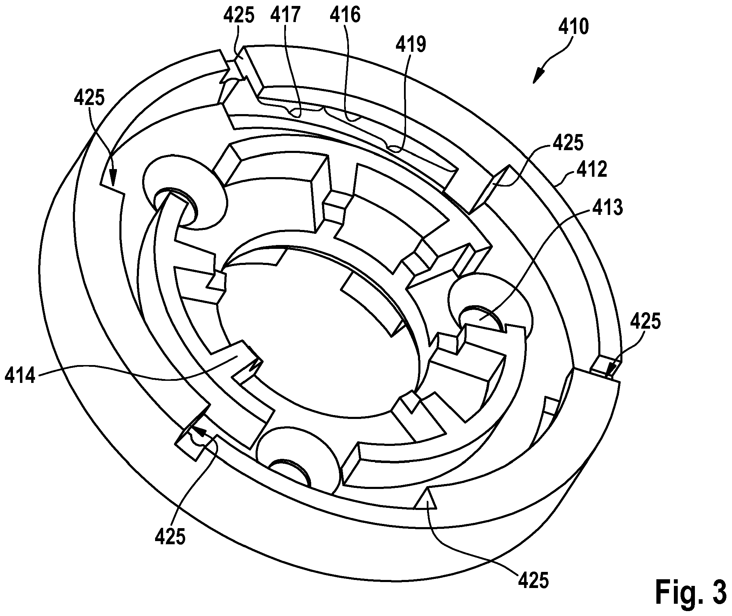

Unter Bezugnahme auf die Figuren 3 und 8 wird dies dadurch erreicht, dass der Flanschring 412 zumindest eine, im dargestellten Fall drei, angefaste Hinterschneidungen 416 aufweist, die sich in Umfangsrichtung des Flanschringes 412 erstreckt und die eine variable Steigung in Umfangsrichtung aufweist. Bei der Herstellung der Bajonettverbindungseinrichtung 405 greift wenigstens ein in Figur 2 dargestelltes korrespondierendes Hintergreifungselement 423 am Befestigungsring 422 in die Hinterschneidung 416 ein. Bei einer Aufbringung einer Verdrehung am Befestigungsring 422 wird in einem ersten definierten Winkelbereich 417 der Verdrehung das Hintergreifungselement 423 derart entlang der Steigung der angefasten Hinterschneidung 416 geführt, dass eine axiale Bewegungskomponente des Befestigungsrings 422 gegenüber dem Flanschring 412 hervorgerufen wird. Beim Herstellen der Verbindung wird somit das zweite Schnittstellenelement 420 auf das erste Schnittstellenelement 410 zu bewegt, beim Lösen der Verbindung wird dagegen das zweite Schnittstellenelement 420 von dem ersten Schnittstellenelement 410 weg bewegt. Der erste definierte Winkelbereich 417 entspricht in der dargestellten Ausführungsform dem Bereich zwischen dem unverriegelten Verriegelungszustand und einem ersten Verdrehwinkel, beispielsweise 5°, in Richtung des verriegelten Verriegelungszustands. Der erste Winkelbereich 417 wird durch eine ansteigende Kontaktfläche der Hinterschneidung 416 gebildet. Der erste Winkelbereich 417 kann sich in einem Bereich von 3° bis 60° erstrecken. Die Steigung in dem ersten Winkelbereich 417 kann von 0,5° bis 10° betragen, wobei die Werkzeugachse x die Bezugsachse für den Steigungswinkel bildet.

In einer alternativen Ausführungsform ist vorgesehen, dass sich die angefaste Hinterschneidung 416 nicht am Flanschring 412 befindet, sondern am Befestigungsring 422, während das korrespondierende Hintergreifungselement 423 am Flanschring 412 und nicht am Befestigungsring 422 vorgesehen ist. In dieser Ausführungsform weist der Befestigungsring 422 also zumindest eine angefaste zweite Hinterschneidung auf, die sich in Umfangsrichtung des Befestigungsringes 422 erstreckt und die eine variable Steigung aufweist, wobei bei der Herstellung der Bajonettverbindungseinrichtung 405 wenigstens ein korrespondierendes Hintergreifungselement 423 am Flanschring 412 nach Art einer Bajonettverbindung in die zweite Hinterschneidung eingreift, wobei bei einer Aufbringung einer Verdrehung des Befestigungsrings 422 das korrespondierende Hintergreifungselement 423 derart entlang der Steigung der angefasten zweite Hinterschneidung geführt wird, dass in einem ersten definierten Winkelbereich der Verdrehung eine axiale Bewegungskomponente des Befestigungsrings 422 gegenüber dem Flanschring 412 hervorgerufen wird.

In einer alternativen Ausführungsform weist sowohl der Flanschring 412 als auch der Befestigungsring 422 zumindest jeweils eine entsprechende angefaste Hinterschneidung 416 auf.

Die variable Steigung der angefasten Hinterschneidung 416 ist derart ausgeführt, dass die am Befestigungsring 422 aufgebrachte Verdrehung in einem zweiten definierten Winkelbereich 419 der Verdrehung keine axiale Bewegungskomponente des Befestigungsrings 422 gegenüber dem Flanschring 412 hervorruft. In dem zweiten Winkelbereich 419 weist die Hinterschneidung 416 keine Steigung auf. Der zweite Winkelbereich 419 wird durch eine im Wesentlichen ebene Kontaktfläche der Hinterschneidung 416 gebildet. Im dargestellten Ausführungsbeispiel entspricht der zweite definierte Winkelbereich 419 dem Bereich zwischen dem verriegelten Verriegelungszustand und einem zweiten Verdrehwinkel, beispielsweise 5°, in Richtung des unverriegelten Verriegelungszustands. Durch den zweiten definierten Winkelbereich 419 der Verdrehung, bei dem eine am Befestigungsring aufgebrachte Verdrehung keine axiale Bewegungskomponente des Befestigungsrings gegenüber dem Flanschring hervorruft, ist es möglich, das zweite Schnittstellenelement gegenüber dem ersten Schnittstellenelement zu verdrehen, ohne die axiale Verspannung der beiden Bauteile zu erhöhen. Hierdurch kann eine definierte Winkelposition des Verriegelungselementes gegenüber dem Getriebegehäuse gewählt werden, in welcher auch die Arretierung der Bajonettverbindungsvorrichtung 405 vorgenommen werden kann. Ein Verspannen bzw. Blockieren der Bajonettverbindungsvorrichtung 405 bei einem Verdrehwinkel, der nicht der vorgesehenen Arretierungsposition entspricht, wie dies aufgrund von Fertigungstoleranzen bei herkömmlichen Hinterschneidungen mit konstanter Steigung der Fall sein kann, ist hiermit weitestgehend ausgeschlossen. Der zweite Winkelbereich 419 kann sich in einem Bereich von 5° bis 85° erstrecken.

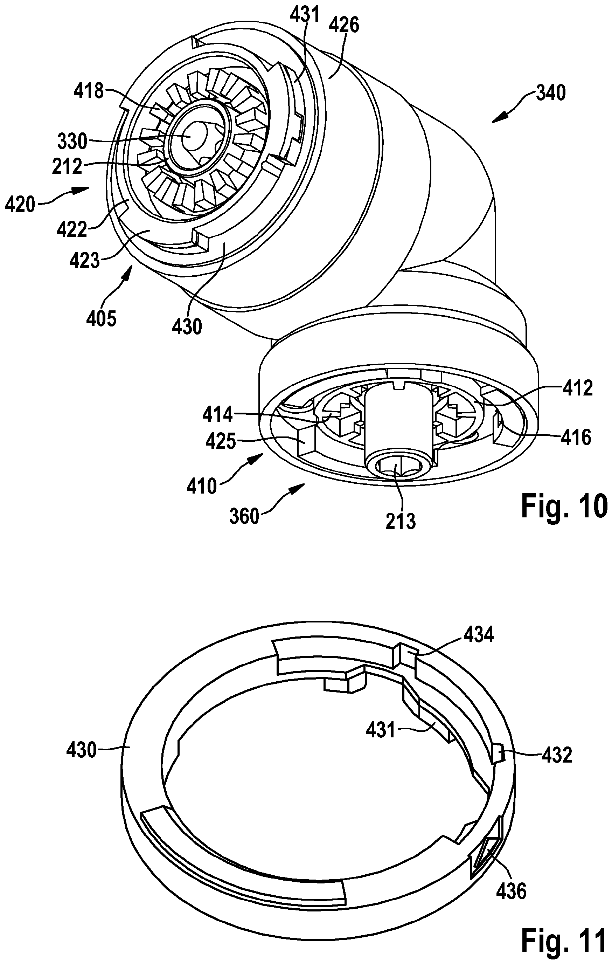

In Figur 2 ist ferner ein Rastring 430 dargestellt, der im Detail in Figur 11 zu sehen ist. Der Rastring 430 ist, wie auch der Befestigungsring 422, drehbar am Werkzeugvorsatz 340 gelagert. Der Rastring 430 dient dazu, eine Arretierung der Bajonettverbindungseinrichtung 405 im verriegelten Verriegelungszustand zu erreichen. Dies wird dadurch erreicht, dass der Befestigungsring 422 gegenüber dem Rastring 430 verdreht wird. Hierdurch ergibt sich die Möglichkeit, den Befestigungsring 422 gegenüber dem Rastring 430 zu arretieren. In der vorliegenden Ausführungsform weist das gehäuseseitige, erste Schnittstellenelement 410 zu diesem Zwecke zumindest ein Fixierelement 425 auf, welches beim Eingriff des Befestigungsringes 422 mit dem Flanschring 412 den Rastring 430 gegenüber dem Flanschring 412 verdrehsicher fixiert. In der dargestellten Ausführungsform werden sechs solcher Fixierelemente 425 durch stirnseitige Bereiche der Hinterschneidungen 416 gebildet, die den Rastring 430 im Bereich von korrespondierenden axial hervortretenden Ausstülpungen 431 des Rastrings 430, insbesondere im Bereich von Seitenflächen der axialen Ausstülpungen, verdrehsicher fixieren.

Wird nun der Befestigungsring 422 mit dem Flanschring 412 in Eingriff gebracht und gegenüber dem Flanschring 412 gedreht, erfolgt automatisch auch eine Verdrehung des Befestigungsringes 422 gegenüber dem Rastring 430, da dieser ja durch die Fixierelemente 425 verdrehsicher am ersten Schnittstellenelement 410 gehalten ist (s.o.). In der vorliegenden Ausführungsform erfolgt die Arretierung des Befestigungsrings 422 gegenüber dem Rastring 430 in verriegelten Verriegelungszustand durch ein Rastelement 424, das am Befestigungsring 422 angeordnet ist und das bei Herstellen der Bajonettverbindungseinrichtung 405 bei einem definierten Verdrehwinkel des Befestigungsringes 422 gegenüber dem Rastring 430, der dem verriegelten Verriegelungszustand der Bajonettverbindung 405 entspricht, in eine erste Ausnehmung 432 einrastet, die am Rastring 430 angeordnet ist. Das Rastelement 424 kann beispielsweise eine Nocke einer Rastfeder sein oder eine federnd gelagerte Kugel.

Beim Lösen der Arretierung wird durch eine aufgebrachte Rotation des Befestigungsringes 422 der Widerstand des Rastelementes 424 überwunden, das aus der ersten Ausnehmung 432 ausrückt und die Verdrehung des Befestigungsringes 422 relativ zum Rastring 430 freigibt. In der Winkelposition des Befestigungsringes 422 gegenüber dem Rastring 430, in welcher das Hintergreifungselement 423 durch die Hinterschneidung 416 freigegeben wird und die Bajonettverbindungseinrichtung 405 gelöst ist, und der demnach dem entriegelten Verriegelungszustand der Bajonettverbindung 405 entspricht, rastet das Rastelement 424 in eine zweite Ausnehmung 434 ein. Hierdurch wird eine Verdrehsicherung des Befestigungsringes 422 gegenüber dem Rastring 430 erreicht, wenn das erste Schnittstellenelement 410 und das zweite Schnittstellenelement 420 nicht miteinander in Eingriff stehen. Diese Konfiguration ist auch in Figur 9 erkennbar, wo drei Ausstülpungen 431 des Rastrings 430 und die Hintergreifungselemente 423 des Befestigungsrings 422 derart axial hintereinander in Deckung liegend angeordnet sind, dass ein Eingriff mit den Hinterschneidungen 416 des Flanschringes 412 ermöglicht wird.

In der in Figur 2 dargestellten Ausführungsform weist die Schnittstelle 400 ein Lager 401 auf, welches Bestandteil der zweiten Schnittstellenelementes 420 ist und gegen welches das erste Schnittstellenelement 410 durch die axiale relative Verschiebungskomponente des zweiten Schnittstellenelementes 420 gegenüber dem ersten Schnittstellenelement 410 bei der Herstellung der Bajonettverbindungseinrichtung 405 abstützt. In der vorliegenden Ausführungsform ist der Befestigungsring 422 zudem an dem Werkzeugvorsatz 340 in axialer Richtung federelastisch gelagert, sodass bei Herstellen der Bajonettverbindungseinrichtung 405 und der damit verbundenen axialen Relativbewegung zwischen dem Befestigungsring 422 und dem Flanschring 412 das erste Schnittstellenelement 410 und das zweite Schnittstellenelement 420 axial gegeneinander vorgespannt werden. Eine solche axiale Vorspannung sorgt für eine weitestgehende Elimination des Kippspiels der Schnittstelle 400.

Beispielhaft ist diese federelastische Lagerung in der in Figur 2 gezeigten Ausführungsform durch ein ringförmiges Elastomerelement 342 ausgeführt. Eine weitere Möglichkeit zur Realisierung der federelastischen Lagerung, die in Figur 4 gezeigt ist, besteht in einer Feder 344.

In der in Figur 4 dargestellten Ausführungsform ist eine Ausgangsspindel 214 parallel zur Eingangsspindel 212 versetzt, sodass beim Betrieb ein Drehmoment durch die Schnittstelle 400 aufgenommen werden muss. Zu diesem Zweck weist das erste Schnittstellenelement 410 wenigstens ein in Figur 3 dargestelltes Rippenelement 414 auf, das mit wenigstens einer korrespondierenden Rastnase 418 des zweiten Schnittstellenelements 420 derart in Eingriff bringbar ist, dass bei Herstellung der Bajonettverbindungseinrichtung 405 der Werkzeugvorsatz 340 gegenüber dem Getriebegehäuse 320 verdrehsicher fixiert ist. In der in Figur 3 dargestellten Ausführungsform sind sechs Rippenelemente 414 vorgesehen. In der dargestellten Ausführungsform sind sechzehn zu den sechs Rippenelementen 414 korrespondierende Rastnasen 418 Teil einer hülsenförmigen Struktur, die auch die Funktion einer Zentrierhülse um das Lager 401 hat.

Beim Verriegeln der Bajonettverbindungsvorrichtung 405 werden nun durch die axiale Verschiebungskomponente zwischen dem ersten Schnittstellenelement 410 und dem zweiten Schnittstellenelement 420 die Rastnasen 418 mit den Rippenelementen 414 in Eingriff gebracht und durch ein Federelement 428, das in der dargestellten Ausführungsform gleichzeitig die Funktion der federelastischen Lagerung des Befestigungsrings 422 innehat und als Spiralfeder ausgeführt ist, gegen das erste Schnittstellenelement 410 vorgespannt.

Während die Rastnasen 418 nach Eingriff mit den Rippenelementen 414 nicht mehr gegen das erste Schnittstellenelement 410 verdreht werden können, ist der Befestigungsring 422 jedoch weiterhin bezüglich des ersten Schnittstellenelements 410 drehbar, sodass wie oben beschrieben die Bajonettverbindungseinrichtung 405 durch Verdrehen des Befestigungsrings 422 gegenüber dem Flanschring 412 verriegelt und arretiert werden kann.

Dadurch, dass die Rastnasen 418 federelastisch gegen das erste Schnittstellenelement 410 vorgespannt sind, ist es möglich, dass der Werkzeugvorsatz 340 im arretierten Zustand der Bajonettverbindungseinrichtung 405 gegen die Vorspannkraft des Federelementes 428 in axialer Richtung x von dem Getriebegehäuse 320 weggezogen werden kann, sodass der Eingriff zwischen Rastnasen 418 und Rippenelementen 414 aufgehoben und eine Verdrehung des Werkzeugvorsatzes 340 gegenüber dem Getriebegehäuse 320 ermöglicht wird.

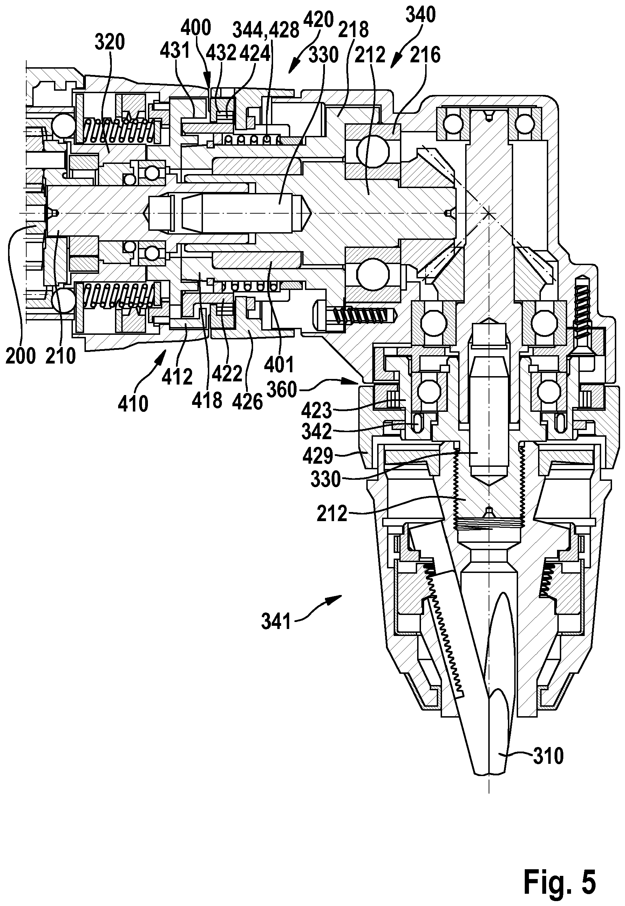

Eine Verdrehung des Werkzeugvorsatzes 340 gegenüber dem Getriebegehäuse 320 ist beispielsweise wünschenswert, um in bestimmten Situationen die Arbeitsergonomie zu erhöhen. So ist es bei Verwendung eines Rechtwinkel-Werkzeughalters, wie er in Figur 5 dargestellt ist, oftmals notwendig, die Richtung zu ändern, in welcher der rechte Winkel des Werkzeugvorsatzes 340 vom Getriebegehäuse 320 absteht. Mit der vorliegenden Erfindung ist es möglich, diese Richtungsänderung durch die im Vorangehenden beschriebene Aufhebung des Eingriffs zwischen Rastnasen 418 und Rippenelementen 414 vorzunehmen, ohne dass hierfür die Arretierung der Bajonettverschlussvorrichtung 405 gelöst werden müsste. Die Trennung der beiden Mechanismen unterstützt somit eine effiziente und ergonomische Arbeitsweise.

In den Figuren 5 und 10 ist ferner eine weitere Ausgestaltung der vorliegenden Erfindung dargestellt, der zufolge der Werkzeugvorsatz 340 zusätzlich zu dem zweiten Schnittstellenelement 420 auch ein nach Art des ersten Schnittstellenelements 410 der Handwerkzeugmaschine 300 ausgebildetes Zusatzschnittstellenelement 360 umfasst, sodass an das Zusatzschnittstellenelement 360 ein weiterer Werkzeugvorsatz 341 adaptiert werden kann und somit der Betrieb mehrerer, hintereinander angeordneter Werkzeugvorsätze 340, 341 am Getriebegehäuse 320 möglich ist, die miteinander durch Bajonettverbindungseinrichtungen 405 verbunden sind. Im dargestellten Fall handelt es sich bei dem ersten Werkzeugvorsatz 340 um einen Rechtwinkel-Werkzeughalter und bei dem weiteren Werkzeugvorsatz 341 um einen Bohrfutter-Werkzeughalter, der nur in Figur 5 dargestellt ist. Wie den Figuren 5 und 10 entnommen werden kann, ist das Zusatzschnittstellenelement 360 gemäß der in Figur 3 abgebildeten Ausführungsform der Erfindung ausgebildet. Ferner ist in der Figur 5 zu erkennen, dass eine Eingangslagerbuchse 216 am Werkzeugvorsatz 340 vorgesehen ist. Die Eingangslagerbuchse 216 nimmt an ihrem Innenumfang die Eingangsspindel 212 des Werkzeugvorsatzes 340 auf und wird entlang ihres Außenumfangs abschnittsweise sowohl von einer Zentrierhülse 218 der Eingangsspindel 212 als auch von Abschnitten des Gehäuses des Werkzeugvorsatzes 340 umgriffen. Auf diese Weise erfolgt eine gleichzeitige Zentrierung des Gehäuses des Werkzeugvorsatzes 340 und der Schnittstelle 400 durch die Eingangslagerbuchse 216.

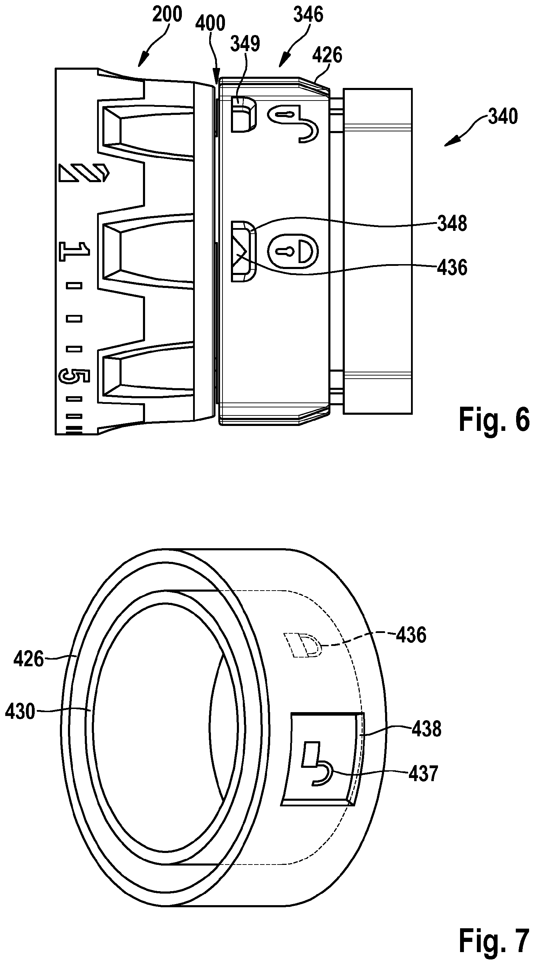

In Figur 6 ist eine Ansicht der Schnittstelle 400 dargestellt. Auf der linken Seite ist ein Teil des Getriebes 200 mit einem nicht näher bezeichneten Einstellring zur Einstellung eines Drehmoments zu erkennen, auf der rechten Seite davon ein Teil des Werkzeugvorsatzes 340 mit dem Feststellring 426. Um dem Benutzer einen schnellen Überblick über den Verriegelungszustand der Bajonettverbindungsvorrichtung 405 zu verschaffen, ist eine Anzeigeeinrichtung 346 vorgesehen, welche unabhängig vom verwendeten Werkzeugvorsatz 340, unabhängig von der Winkelposition des Werkzeugvorsatz 340 zum Getriebegehäuse 320, und unabhängig von der Winkelposition der Anzeigeeinrichtung 346 des Werkzeugvorsatz 340 zum Rest des Werkzeugvorsatz 340 den entriegelten und den verriegelten Verriegelungszustand der Bajonettverbindungseinrichtung 405 anzeigt.

In der dargestellten Ausführungsform der Figur 6 umfasst die Anzeigeeinrichtung 346 eine erste Anzeigeaussparung 348 und eine zweite Anzeigeaussparung 349 im Feststellring 426 sowie ein erstes Symbol 436 auf dem Rastring 430, in diesem Falle die Spitze eines Pfeils, welches ausschließlich dann zentriert durch die erste Anzeigeaussparung 348 sichtbar ist, wenn das Rastelement 424 des Befestigungsringes 422 in die erste Ausnehmung 432 eingerastet ist, und welches ausschließlich dann zentriert durch die zweite Anzeigeaussparung 349 sichtbar ist, wenn das Rastelement 424 des Befestigungsringes 422 in die zweite Ausnehmung 434 eingerastet ist.

Ein Einrasten des Rastelements 424 des Befestigungsringes 422 in die erste Ausnehmung 432 bedeutet gemäß der weiter oben im Zusammenhang mit Figur 2 gemachten Ausführungen, dass die Bajonettverbindungseinrichtung 405 im verriegelten Verriegelungszustand ist. Dies kann dem Benutzer durch eine entsprechende Kennzeichnung der ersten Anzeigeaussparung 348 verdeutlicht werden, beispielsweise durch das in Figur 6 dargestellte Symbol eines geschlossenen Vorhängeschlosses.

Ein Einrasten des Rastelements 424 des Befestigungsringes 422 in die zweite Ausnehmung 434 dagegen bedeutet, dass die Bajonettverbindungseinrichtung 405 im entriegelten Verriegelungszustand ist. In der vorliegenden Ausführungsform wird dies dem Benutzer durch das in Figur 6 dargestellte Symbol eines geöffneten Vorhängeschlosses neben der zweiten Anzeigeaussparung 349 verdeutlicht.

In einer alternativen Ausführungsform, die in Figur 7 dargestellt ist, umfasst die Anzeigeeinrichtung 346 nur die erste Anzeigeaussparung 348 im Feststellring 426, dafür zusätzlich zu dem ersten Symbol 436 ein zweites Symbol 437 auf dem Rastring 430, wobei das erste Symbol 436 ausschließlich dann zentriert durch die erste Anzeigeaussparung 348 sichtbar ist, wenn das Rastelement 424 des Befestigungsringes 422 in die erste Ausnehmung 432 eingerastet ist, und wobei das zweite Symbol 437 ausschließlich dann zentriert durch die Anzeigeaussparung 348 sichtbar ist, wenn das Rastelement 424 des Befestigungsringes 422 in die zweite Ausnehmung 434 eingerastet ist. In der in Figur 7 dargestellten Ausführungsform ist das erste Symbol 436 ein geschlossenes Vorhängeschloss und das zweite Symbol 437 ein geöffnetes Vorhängeschloss, wodurch wie oben geschildert der verriegelte beziehungsweise der entriegelte Verriegelungszustand gekennzeichnet werden.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann die Erfindung, sowohl bei Akku-Handwerkzeugmaschinen als auch bei Handwerkzeugmaschinen, die mit einem Netzanschluss versehen sind in vielfältiger Art und Weise Verwendung finden.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Handwerkzeugmaschine (300) umfassend ein Getriebegehäuse (320) mit einem Getriebe (200) zur Übertragung eines von einem Antriebsmotor erzeugten Drehmomentes auf eine um eine Drehachse (x) rotierende Spindel (210), die eine axiale Richtung (x) definiert,
wobei das Getriebegehäuse (320) derart mit einem Werkzeugvorsatz (340) über ein gehäuseseitiges Schnittstellenelement (410) austauschbar verbindbar ist, dass ein Drehmoment von der Spindel (210) auf eine Eingangsspindel (212) des Werkzeugvorsatzes (340) übertragen wird,
wobei das gehäuseseitige Schnittstellenelement (410) einen Flanschring (412) aufweist, welcher drehstarr mit dem Getriebegehäuse (320) verbunden ist, und mit einem werkzeugvorsatzseitigen Schnittstellenelement (420) korrespondiert, das einen Befestigungsring (422) aufweist, der drehbar am Werkzeugvorsatz (340) gelagert ist,
wobei der Befestigungsring (422) mit dem Flanschring (412) derart durch eine gekoppelte rotatorische und axiale Relativbewegung des Befestigungsringes (422) gegenüber dem Flanschring (412) in Eingriff zu bringen ist, dass der Befestigungsring (422) und der Flanschring (412) gemeinsam eine Bajonettverbindungseinrichtung (405) bilden, **dadurch gekennzeichnet, dass**
wobei der Flanschring (412) zumindest eine angefaste Hinterschneidung (416) aufweist, die sich in Umfangsrichtung des Flanschringes (412) erstreckt und die eine variable Steigung aufweist, wobei bei der Herstellung der Bajonettverbindungseinrichtung (405) wenigstens ein korrespondierendes Hintergreifungselement (423) am Befestigungsring (422) nach Art einer Bajonettverbindung in die Hinterschneidung (416) eingreift, wobei bei einer Aufbringung einer Verdrehung des Befestigungsrings (422) das Hintergreifungselement (423) derart entlang der Steigung der angefasten Hinterschneidung (416) geführt wird, dass in einem ersten definierten Winkelbereich der Verdrehung eine axiale Bewegungskomponente des Befestigungsrings (422) gegenüber dem Flanschring (412) hervorgerufen wird.

2. Handwerkzeugmaschine nach Anspruch 1, **dadurch gekennzeichnet, dass** das werkzeugvorsatzseitige Schnittstellenelement (420) des Weiteren einen Rastring (430) umfasst, wobei die Bajonettverbindungseinrichtung (405) durch ein Verdrehen des Befestigungsringes (422) gegenüber dem Rastring (430) arretierbar ist.

3. Handwerkzeugmaschine (300) nach einem der Ansprüche 1 oder 2, **dadurch gekennzeichnet, dass** der Befestigungsring (422) zumindest eine angefaste zweite Hinterschneidung aufweist, die sich in Umfangsrichtung des Befestigungsringes (422) erstreckt und die eine variable Steigung aufweist, wobei bei der Herstellung der Bajonettverbindungseinrichtung (405) wenigstens ein korrespondierendes zweites Hintergreifungselement am Flanschring (412) nach Art einer Bajonettverbindung in die zweite Hinterschneidung eingreift, wobei bei einer Aufbringung einer Verdrehung des Befestigungsrings (422) das zweite Hintergreifungselement derart entlang der Steigung der angefasten zweite Hinterschneidung geführt wird, dass in einem ersten definierten Winkelbereich der Verdrehung eine axiale Bewegungskomponente des Befestigungsrings (422) gegenüber dem Flanschring (412) hervorgerufen wird.

4. Handwerkzeugmaschine (300) nach einem der Ansprüche 1 bis 3, **dadurch gekennzeichnet, dass** die variable Steigung der angefasten Hinterschneidung (416) derart ausgeführt ist, dass die am Befestigungsring (422) aufgebrachte Verdrehung in einem zweiten definierten Winkelbereich der Verdrehung keine axiale Bewegungskomponente des Befestigungsrings (422) gegenüber dem Flanschring (412) hervorruft.

5. Handwerkzeugmaschine (300) nach einem der Ansprüche 2 bis 4, **dadurch gekennzeichnet, dass** sowohl der Rastring (430) als auch der Befestigungsring (422) drehbar am Werkzeugvorsatz (340) gelagert sind, und dass das gehäuseseitige Schnittstellenelement (410) zumindest ein Fixierelement (425) aufweist, welches beim Eingriff des Befestigungsringes (422) mit dem Flanschring (412) den Rastring (430) gegenüber dem Flanschring (412) verdrehsicher fixiert.

6. Handwerkzeugmaschine (300) nach einem der Ansprüche 2 bis 5, **dadurch gekennzeichnet, dass** der Rastring (430) zumindest eine erste Ausnehmung (432) aufweist, die mit zumindest einem korrespondierenden Rastelement (424) des Befestigungsringes (422) derart zusammenwirkt, dass bei Herstellen der Bajonettverbindungseinrichtung (405) das Rastelement (424) bei einem definierten Verdrehwinkel des Befestigungsringes (422) gegenüber dem Rastring (430) in die erste Ausnehmung (432) einrastet, wodurch die Arretierung des Befestigungsringes (422) gegenüber dem Rastring (430) erreicht wird.

7. Handwerkzeugmaschine (300) nach Anspruch 1 bis 6, **dadurch gekennzeichnet, dass** der Rastring (430) zumindest eine zweite Ausnehmung (434) aufweist, die mit zumindest einem Rastelement (424) des Befestigungsringes (422) derart zusammenwirkt, dass bei Lösen der Bajonettverbindungseinrichtung (405) das Rastelement (424) bei einem definierten Verdrehwinkel des Befestigungsringes (422) gegenüber dem Rastring (430) in die zweite Ausnehmung (434) einrastet, wodurch eine Verdrehsicherung des Befestigungsringes (422) gegenüber dem Rastring (430) erreicht wird, wenn das gehäuseseitige Schnittstellenelement (410) und das werkzeugvorsatzseitige Schnittstellenelement (420) nicht miteinander in Eingriff stehen.

8. Handwerkzeugmaschine (300) nach Anspruch 7, **dadurch gekennzeichnet, dass** der zweite definierte Winkelbereich der Verdrehung einem Bereich entspricht, der sich vom Einrasten des Rastelements (424) in die erste Ausnehmung (432) bis zu einer Verdrehung des Befestigungsringes (422) gegenüber dem Rastring (430) um einen definierten Drehwinkel erstreckt, und der erste definierte Winkelbereich der Verdrehung den übrigen Verdrehwinkel des Befestigungsringes (422) gegenüber dem Rastring (430) bis zum Einrasten des Rastelements (424) in die zweite Ausnehmung (434) entspricht.

9. Handwerkzeugmaschine (300) nach einem der Ansprüche 1 bis 8, **dadurch gekennzeichnet, dass** das gehäuseseitige Schnittstellenelement (410) wenigstens ein Rippenelement (414) aufweist, das mit wenigstens einer korrespondierenden Rastnase des werkzeugvorsatzseitigen Schnittstellenelements (420) derart in Eingriff bringbar ist, dass bei Herstellung der Bajonettverbindungseinrichtung (405) der Werkzeugvorsatz (340) gegenüber dem Getriebegehäuse (320) verdrehsicher fixiert ist.

10. Werkzeugvorsatz (340) zur austauschbaren Verbindung mit einer Handwerkzeugmaschine (300),
mit einem werkzeugvorsatzseitigen Schnittstellenelement (420), welches mit einem gehäuseseitigen Schnittstellenelement (410) austauschbar verbindbar ist,
wobei das werkzeugvorsatzseitige Schnittstellenelement (420) einen Befestigungsring (422) aufweist, der drehbar am Werkzeugvorsatz (340) gelagert ist,
wobei der Befestigungsring (422) mit dem gehäuseseitigen Schnittstellenelement (410) derart durch eine gekoppelte rotatorische und axiale Relativbewegung des Befestigungsringes (422) gegenüber dem gehäuseseitigen Schnittstellenelement (410) in Eingriff bringbar ist, dass der Befestigungsring (422) und das gehäuseseitige Schnittstellenelement (410) gemeinsam eine Bajonettverbindungseinrichtung (405) bilden,
**dadurch gekennzeichnet, dass** der Befestigungsring (422) zumindest eine angefaste Hinterschneidung aufweist, die sich in Umfangsrichtung des Befestigungsringes (422) erstreckt und die eine variable Steigung aufweist, wobei bei der Herstellung der Bajonettverbindungseinrichtung wenigstens ein korrespondierendes Hintergreifungselement an einem Flanschring (412) des gehäuseseitigen Schnittstellenelements (410) nach Art einer Bajonettverbindung in die Hinterschneidung eingreift, wobei bei einer Aufbringung einer Verdrehung des Befestigungsrings (422) das korrespondierende Hintergreifungs¬element derart entlang der Steigung der angefasten Hinterschneidung geführt wird, dass in einem ersten definierten Winkelbereich der Verdrehung eine axiale Bewegungskomponente des Befestigungsrings (422) gegenüber dem Flanschring (412) hervorgerufen wird.

11. Werkzeugvorsatz (340) nach Anspruch 10, **dadurch gekennzeichnet, dass** das werkzeugvorsatzseitige Schnittstellenelement (420) des weiteren einen Rastring (430) umfasst, wobei die Bajonettverbindungseinrichtung (405) durch ein Verdrehen des Befestigungsringes (422) gegenüber dem Rastring (430) arretierbar ist.

12. Werkzeugvorsatz (340) nach einem der Ansprüche 10 oder 11, **dadurch gekennzeichnet, dass** die Drehung des Befestigungsrings (422) über einen Feststellring (426) erfolgt, der konzentrisch zum Befestigungsring (422) am Werkzeugvorsatz (340) gelagert ist und drehfest mit dem Befestigungsring (422) verbunden ist.

13. Werkzeugvorsatz (340) nach einem der Ansprüche 10 bis 12, **dadurch gekennzeichnet, dass** der Befestigungsring (422) an dem Werkzeugvorsatz (340) in axialer Richtung federelastisch gelagert ist, sodass bei Herstellen der Bajonettverbindungseinrichtung (405) und der damit verbundenen axialen Relativbewegung zwischen dem Befestigungsring (422) und dem Flanschring (412) das gehäuseseitige Schnittstellenelement (410) und das werkzeugseitige Schnittstellenelement (420) axial gegeneinander vorgespannt werden.

14. Werkzeugvorsatz (340) nach Anspruch 13, **dadurch gekennzeichnet, dass** die federelastische Lagerung durch ein Elastomerelement (342) und/oder eine Feder (344) erfolgt.

15. Werkzeugvorsatz (340) nach einem der Ansprüche 10 bis 14, **dadurch gekennzeichnet, dass** eine Rastnase (418) des werkzeugvorsatzseitigen Schnittstellenelements (420) derart durch ein Federelement (428) mit dem Befestigungsring (422) verbunden ist, dass eine Vorspannung der Rastnase (418) gegen das gehäuseseitige Schnittstellenelement (410) erfolgt.

16. Werkzeugvorsatz (340) nach Anspruch 15, **dadurch gekennzeichnet, dass** das Federelement (428) eine Spiralfeder ist, die als Druck- oder Zugfeder ausgebildet ist.

17. Werkzeugvorsatz (340) nach einem der Ansprüche 10 bis 16, **dadurch gekennzeichnet, dass** der Werkzeugvorsatz (340) als Bohrfutter-Werkzeughalter, als Rechtwinkel-Werkzeughalter, als Exzenter-Werkzeughalter, als Bithaltervorsatz, als Drehschlagschraubvorsatz, als Schlagbohrvorsatz, als Bohrhammervorsatz oder als Drehmomentenvorsatz ausgebildet ist.

18. Werkzeugvorsatz (340) nach einem der Ansprüche 10 bis 17, **dadurch gekennzeichnet, dass** am Werkzeugvorsatz (340) eine Anzeigeeinrichtung (346) vorgesehen ist, welche unabhängig vom verwendeten Werkzeugvorsatz (340), unabhängig von der Winkelposition des Werkzeugvorsatz (340) zum Getriebegehäuse (320), und unabhängig von der Winkelposition der Anzeigeeinrichtung (346) des Werkzeugvorsatz (340) zum Rest des Werkzeugvorsatz (340) den entriegelten und den verriegelten Verriegelungszustand der Bajonettverbindungseinrichtung (405) anzeigt.

19. Werkzeugvorsatz (340) nach Anspruch 18, **dadurch gekennzeichnet, dass**
die Anzeigeeinrichtung (346) eine erste Anzeigeaussparung (348) und eine zweite Anzeigeaussparung (349) im Feststellring (426) umfasst sowie ein erstes Symbol (436) auf dem Rastring (430), welches ausschließlich dann zentriert durch die erste Anzeigeaussparung (348) sichtbar ist, wenn das Rastelement (424) des Befestigungsringes (422) in die erste Ausnehmung (432) eingerastet ist, und welches ausschließlich dann zentriert durch die zweite Anzeigeaussparung (349) sichtbar ist, wenn das Rastelement (424) des Befestigungsringes (422) in die zweite Ausnehmung (434) eingerastet ist.

20. Werkzeugvorsatz (340) nach Anspruch 18, **dadurch gekennzeichnet, dass**
die Anzeigeeinrichtung (346) eine erste Anzeigeaussparung (438) im Feststellring (426) umfasst sowie ein erstes Symbol (436) und ein zweites Symbol (437) auf dem Rastring (430), wobei das erste Symbol (436) ausschließlich dann zentriert durch die erste Anzeigeaussparung (348) sichtbar ist, wenn das Rastelement (424) des Befestigungsringes (422) in die erste Ausnehmung (432) eingerastet ist, und wobei das zweite Symbol (437) ausschließlich dann zentriert durch die erste Anzeigeaussparung (348) sichtbar ist, wenn das Rastelement (424) des Befestigungsringes (422) in die zweite Ausnehmung (434) eingerastet ist.

21. Werkzeugvorsatz (340) nach einem der Ansprüche 10 bis 20, **dadurch gekennzeichnet, dass** der Werkzeugvorsatz (340) zusätzlich zum werkzeugvorsatzseitigen Schnittstellenelement (420) auch eine nach Art des gehäuseseitigen Schnittstellenelementes (410) der Handwerkzeugmaschine ausgebildete Zusatzschnittstelle (360) umfasst, sodass an der Zusatzschnittstelle (360) ein weiterer Werkzeugvorsatz (341) adaptiert werden kann und somit der Betrieb mehrerer, hintereinander angeordneter Werkzeugvorsätze (340, 341) am Getriebegehäuse (320) möglich ist, die miteinander durch Bajonettverbindungseinrichtungen (405) verbunden sind.

22. Werkzeugvorsatz (340) nach einem der Ansprüche 10 bis 21, **dadurch gekennzeichnet, dass** des Weiteren eine Eingangslagerbuchse (216) am Werkzeugvorsatz (340) vorgesehen ist, wobei die Eingangslagerbuchse (216) an ihrem Innenumfang die Eingangsspindel (212) des Werkzeugvorsatzes (340) aufnimmt und entlang ihres Außenumfangs abschnittsweise sowohl von einer Zentrierhülse (218) der Eingangsspindel (212) als auch von Abschnitten des Gehäuses des Werkzeugvorsatzes (340) umgriffen wird, sodass eine gleichzeitige Zentrierung des Gehäuses des Werkzeugvorsatzes (340) und der Schnittstelle (400) durch die Eingangslagerbuchse (216) erfolgt.

23. Werkzeugsystem mit einer Handwerkzeugmaschine (300) nach einem der Ansprüche 1 bis 9 und einem Werkzeugvorsatz (340) nach einem der Ansprüche 10 bis 22, wobei die Handwerkzeugmaschine (300) mit dem Werkzeugvorsatz (340) über eine Schnittstelle (400) austauschbar verbindbar ist.

24. Werkzeugsystem nach Anspruch 23, **dadurch gekennzeichnet, dass** die Handwerkzeugmaschine (300) ein Getriebegehäuse (320) mit einem Getriebe (200) zur Übertragung eines von einem Antriebsmotor erzeugten Drehmomentes auf eine um eine Drehachse (x) rotierende Spindel (210) umfasst, wobei die Spindel (210) eine axiale Richtung (x) definiert,
wobei das Getriebegehäuse (320) derart mit dem Werkzeugvorsatz (340) über eine Schnittstelle (400) austauschbar verbindbar ist, dass ein Drehmoment von der Spindel (210) auf eine Eingangsspindel (212) des Werkzeugvorsatzes (340) übertragen wird,
wobei die Schnittstelle (400) ein gehäuseseitiges Schnittstellenelement (410) mit einem Flanschring (412) aufweist, wobei der Flanschring (412) drehstarr mit dem Getriebegehäuse (320) verbunden ist, und wobei das gehäuseseitige Schnittstellenelement (410) mit einem werkzeugvorsatzseitigen Schnittstellenelement (420) korrespondiert, das einen Befestigungsring (422) aufweist, der drehbar am Werkzeugvorsatz (340) gelagert ist,
wobei der Befestigungsring (422) mit dem Flanschring (412) derart durch eine gekoppelte rotatorische und axiale Relativbewegung des Befestigungsringes (422) gegenüber dem Flanschring (412) in Eingriff zu bringen ist, dass der Befestigungsring (422) und der Flanschring (412) gemeinsam eine Bajonettverbindungseinrichtung (405) bilden.

25. Werkzeugsystem nach Anspruch 24, **dadurch gekennzeichnet, dass** das werkzeugvorsatzseitige Schnittstellenelement (420) des Weiteren einen Rastring (430) umfasst, wobei die Bajonettverbindungseinrichtung (405) durch ein Verdrehen des Befestigungsringes (422) gegenüber dem Rastring (430) arretierbar ist.

26. Werkzeugsystem nach einem der Ansprüche 24 oder 25, **dadurch gekennzeichnet, dass** das gehäuseseitige Schnittstellenelement (410) wenigstens ein Rippenelement (414) aufweist, das mit wenigstens einer korrespondierenden Rastnase (418) des werkzeugvorsatzseitigen Schnittstellenelements (420) derart in Eingriff bringbar ist, dass bei Herstellung der Bajonettverbindungseinrichtung (405) der Werkzeugvorsatz (340) gegenüber dem Getriebegehäuse (320) verdrehsicher fixiert ist.

27. Werkzeugsystem nach Anspruch 26, **dadurch gekennzeichnet, dass** der Werkzeugvorsatz (340) im arretierten Zustand der Bajonettverbindungseinrichtung (405) gegen die Vorspannkraft eines Federelementes (428) in axialer Richtung (x) von dem Getriebegehäuse (320) weggezogen werden kann, sodass der Eingriff zwischen der Rastnase (418) und dem Rippenelement (414) aufgehoben und eine Verdrehung des Werkzeugvorsatzes (340) gegenüber dem Getriebegehäuse (320) ermöglicht wird.

## Claims

1. Portable power tool (300) comprising a transmission housing (320) having a transmission (200) for transmitting a torque generated by a drive motor to a spindle (210) rotating about an axis of rotation (x) and defining an axial direction (x),
wherein the transmission housing (320) is interchangeably connectable to a tool attachment (340) via a housing-side interface element (410) such that a torque is transmitted from the spindle (210) to an input spindle (212) of the tool attachment (340),
wherein the housing-side interface element (410) has a flange ring (412) connected in a rotationally fixed manner to the transmission housing (320) and corresponds to a tool-attachment-side interface element (420) which has a fastening ring (422) that is mounted rotatably on the tool attachment (340), wherein the fastening ring (422) can be brought into engagement with the flange ring (412) by a coupled rotary and axial relative movement of the fastening ring (422) with respect to the flange ring (412), such that the fastening ring (422) and the flange ring (412) together form a bayonet-joint device (405), **characterized in that**
wherein the flange ring (412) has at least one chamfered undercut (416) that extends in the circumferential direction of the flange ring (412) and has a variable pitch, wherein, during the production of the bayonet-joint device (405), at least one corresponding engaging element (423) on the fastening ring (422) engages in the manner of a bayonet joint in the undercut (416), wherein, when a twist is imparted on the fastening ring (422), the engaging element (423) is guided along the pitch of the chamfered undercut (416) such that, in a first defined angle range of the twist, an axial movement component of the fastening ring (422) with respect to the flange ring (412) is brought about.

2. Portable power tool according to Claim 1, **characterized in that** the tool-attachment-side interface element (420) furthermore comprises a latching ring (430), wherein the bayonet-joint device (405) is lockable by twisting the fastening ring (422) with respect to the latching ring (430).

3. Portable power tool (300) according to either of Claims 1 and 2, **characterized in that** the fastening ring (422) has at least one chamfered second undercut, which extends in the circumferential direction of the fastening ring (422) and has a variable pitch, wherein, during the production of the bayonet-joint device (405), at least one corresponding second engaging element on the flange ring (412) engages in the second undercut in the manner of a bayonet joint, wherein, when a twist is imparted on the fastening ring (422), the second engaging element is guided along the pitch of the chamfered second undercut such that, in a first defined angle range of the twist, an axial movement component of the fastening ring (422) with respect to the flange ring (412) is brought about.

4. Portable power tool (300) according to one of Claims 1 to 3, **characterized in that** the variable pitch of the chamfered undercut (416) is embodied such that the twist imparted on the fastening ring (422) does not bring about an axial movement component of the fastening ring (422) with respect to the flange ring (412) in a second defined angle range of the twist.

5. Portable power tool (300) according to one of Claims 2 to 4, **characterized in that** both the latching ring (430) and the fastening ring (422) are mounted in a rotatable manner on the tool attachment (340), and **in that** the housing-side interface element (410) has at least one fixing element (425) which, upon engagement of the fastening ring (422) with the flange ring (412), fixes the latching ring (430) in a non-twistable manner with respect to the flange ring (412).

6. Portable power tool (300) according to one of Claims 2 to 5, **characterized in that** the latching ring (430) has at least one first recess (432), which cooperates with at least one corresponding latching element (424) on the fastening ring (422) such that, during the production of the bayonet-joint device (405), the latching element (424) latches in the first recess (432) at a defined twist angle of the fastening ring (422) with respect to the latching ring (430), with the result that the fastening ring (422) is locked with respect to the latching ring (430).

7. Portable power tool (300) according to Claims 1 to 6, **characterized in that** the latching ring (430) has at least one second recess (434), which cooperates with at least one latching element (424) of the fastening ring (422) such that, when the bayonet-joint device (405) is released, the latching element (424) latches in the second recess (434) at a defined twist angle of the fastening ring (422) with respect to the latching ring (430), with the result that the fastening ring (422) is prevented from twisting with respect to the latching ring (430) when the housing-side interface element (410) and the tool-attachment-side interface element (420) are no longer in engagement with one another.

8. Portable power tool (300) according to Claim 7, **characterized in that** the second defined angle range of the twist corresponds to a range which extends from the latching of the latching element (424) in the first recess (432) as far as a twist of the fastening ring (422) through a defined rotational angle with respect to the latching ring (430), and the first defined angle range of the twist corresponds to the remaining twist angle of the fastening ring (422) with respect to the latching ring (430) as far as the latching of the latching element (424) in the second recess (434).

9. Portable power tool (300) according to one of Claims 1 to 8, **characterized in that** the housing-side interface element (410) has at least one rib element (414), which is able to be brought into engagement with at least one corresponding latching protrusion of the tool-attachment-side interface element (420) such that, during the production of the bayonet-joint device (405), the tool attachment (340) is fixed in a non-twistable manner with respect to the transmission housing (320).

10. Tool attachment (340) for interchangeably connecting to a portable power tool (300),
having a tool-attachment-side interface element (420) which is interchangeably connectable to a housing-side interface element (410),
wherein the tool-attachment-side interface element (420) has a fastening ring (422) which is mounted in a rotatable manner on the tool attachment (340), wherein the fastening ring (422) is able to be brought into engagement with the housing-side interface element (410) by a coupled rotary and axial relative movement of the fastening ring (422) with respect to the housing-side interface element (410) such that the fastening ring (422) and the housing-side interface element (410) together form a bayonet-joint device (405),
**characterized in that** the fastening ring (422) has at least one chamfered undercut, which extends in the circumferential direction of the fastening ring (422) and has a variable pitch, wherein, during the production of the bayonet-joint device, at least one corresponding engaging element on a flange ring (412) of the housing-side interface element (410) engages in the undercut in the manner of a bayonet joint, wherein, when a twist is imparted on the fastening ring (422), the corresponding engaging element is guided along the pitch of the chamfered undercut such that, in a first defined angle range of the twist, an axial movement component of the fastening ring (422) with respect to the flange ring (412) is brought about.

11. Tool attachment (340) according to Claim 10, **characterized in that** the tool-attachment-side interface element (420) furthermore comprises a latching ring (430), wherein the bayonet-joint device (405) is lockable by twisting the fastening ring (422) with respect to the latching ring (430).

12. Tool attachment (340) as claimed in either of Claims 10 and 11, **characterized in that** the rotation of the fastening ring (422) takes place via a securing ring (426) which is mounted concentrically with the fastening ring (422) on the tool attachment (340) and is connected to the fastening ring (422) for conjoint rotation.

13. Tool attachment (340) according to one of Claims 10 to 12, **characterized in that** the fastening ring (422) is mounted on the tool attachment (340) in a spring-elastic manner in an axial direction, such that, during the production of the bayonet-joint device (405) and the associated axial relative movement between the fastening ring (422) and the flange ring (412), the housing-side interface element (410) and the tool-side interface element (420) are axially pretensioned against one another.

14. Tool attachment (340) according to Claim 13, **characterized in that** the spring-elastic mounting takes place by way of an elastomer element (342) and/or a spring (344).

15. Tool attachment (340) according to one of Claims 10 to 14, **characterized in that** a latching protrusion (418) of the tool-attachment-side interface element (420) is connected to the fastening ring (422) by a spring element (428) such that the latching protrusion (418) is pretensioned against the housing-side interface element (410).

16. Tool attachment (340) according to Claim 15, **characterized in that** the spring element (428) is a spiral spring, which is in the form of a compression spring or tension spring.

17. Tool attachment (340) according to one of Claims 10 to 16, **characterized in that** the tool attachment (340) is in the form of a chuck tool holder, of a right-angle tool holder, of an eccentric tool holder, of a bit holder attachment, of an impact driver attachment, of a percussion drill attachment, of a hammer drill attachment or of a torque attachment.

18. Tool attachment (340) according to one of Claims 10 to 17, **characterized in that** a display device (346) is provided on the tool attachment (340), said display device (346) displaying the unlocked and locked state of locking of the bayonet-joint device (405) irrespective of the tool attachment (340) used, irrespective of the angular position of the tool attachment (340) with respect to the transmission housing (320), and irrespective of the angular position of the display device (346) of the tool attachment (340) with respect to the rest of the tool attachment (340).

19. Tool attachment (340) according to Claim 18, **characterized in that** the display device (346) comprises a first display cutout (348) and a second display cutout (349) in the securing ring (426), and a first symbol (436) on the latching ring (430), which is visible in a manner centred by the first display cutout (348) only when the latching element (424) of the fastening ring (422) is latched in the first recess (432), and which is visible in a manner centred by the second display cutout (349) only when the latching element (424) of the fastening ring (422) is latched in the second recess (434).

20. Tool attachment (340) according to Claim 18, **characterized in that** the display device (346) comprises a first display cutout (438) in the securing ring (426), and a first symbol (436) and a second symbol (437) on the latching ring (430), wherein the first symbol (436) is visible in a manner centred by the first display cutout (348) only when the latching element (424) of the fastening ring (422) is latched in the first recess (432), and wherein the second symbol (437) is visible in a manner centred by the first display cutout (348) only when the latching element (424) of the fastening ring (422) is latched in the second recess (434).

21. Tool attachment (340) according to one of Claims 10 to 20, **characterized in that**, in addition to the tool-attachment-side interface element (420), the tool attachment (340) also comprises an auxiliary interface (360) configured in the manner of the housing-side interface element (410) of the portable power tool, such that a further tool attachment (341) can be adapted to the auxiliary interface (360) and thus the operation of several tool attachments (340, 341), arranged in succession, on the transmission housing (320) is possible, said tool attachments (340, 341) being connected together by bayonet-joint devices (405).

22. Tool attachment (340) according to one of Claims 10 to 21, **characterized in that**, furthermore, an input bearing bush (216) is provided on the tool attachment (340), wherein the input bearing bush (216) receives on its inner circumference the input spindle (212) of the tool attachment (340) and is partially engaged around, along its outer circumference, both by a centring sleeve (218) of the input spindle (212) and by portions of the housing of the tool attachment (340), such that simultaneous centring of the housing of the tool attachment (340) and of the interface (400) takes place by way of the input bearing bush (216).

23. Tool system having a portable power tool (300) according to one of Claims 1 to 9 and a tool attachment (340) according to one of Claims 10 to 22, wherein the portable power tool (300) is interchangeably connectable to the tool attachment (340) via an interface (400).

24. Tool system according to Claim 23, **characterized in that** the portable power tool (300) comprises a transmission housing (320) having a transmission (200) for transmitting a torque generated by a drive motor to a spindle (210) rotating about an axis of rotation (x), wherein the spindle (210) defines an axial direction (x),
wherein the transmission housing (320) is interchangeably connectable to the tool attachment (340) via an interface (400) such that a torque is transmitted from the spindle (210) to an input spindle (212) of the tool attachment (340),
wherein the interface (400) has a housing-side interface element (410) having a flange ring (412), wherein the flange ring (412) is connected in a rotationally fixed manner to the transmission housing (320), and wherein the housing-side interface element (410) corresponds to a tool-attachment-side interface element (420) which has a fastening ring (422) that is mounted in a rotatable manner on the tool attachment (340),
wherein the fastening ring (422) is able to be brought into engagement with the flange ring (412) by a coupled rotary and axial relative movement of the fastening ring (422) with respect to the flange ring (412) such that the fastening ring (422) and the flange ring (412) together form a bayonet-joint device (405).

25. Tool system according to Claim 24, **characterized in that** the tool-attachment-side interface element (420) furthermore comprises a latching ring (430), wherein the bayonet-joint device (405) is lockable by twisting the fastening ring (422) with respect to the latching ring (430).

26. Tool system according to either of Claims 24 and 25, **characterized in that** the housing-side interface element (410) has at least one rib element (414) which is able to be brought into engagement with at least one corresponding latching protrusion (418) of the tool-attachment-side interface element (420) such that, during the production of the bayonet-joint device (405), the tool attachment (340) is fixed in a non-twistable manner with respect to the transmission housing (320).

27. Tool system according to Claim 26, **characterized in that**, in the locked state of the bayonet-joint device (405), the tool attachment (340) can be pulled away from the transmission housing (320) in an axial direction (x) counter to the pretensioning force of a spring element (428), such that the engagement between the latching protrusion (418) and the rib element (414) is released and the tool attachment (340) is allowed to twist with respect to the transmission housing (320).

## Revendications

1. Machine-outil portative (300), comprenant un boîtier de transmission (320) avec une transmission (200) pour transférer un couple généré par un moteur d'entraînement à une broche (210) tournant autour d'un axe de rotation (x), qui définit une direction axiale (x),
le boîtier de transmission (320) pouvant être connecté de manière interchangeable à une pièce d'outil (340) par le biais d'un élément d'interface (410) du côté du boîtier, de telle sorte qu'un couple puisse être transmis de la broche (210) à une broche d'entrée (212) de la pièce d'outil (340),
l'élément d'interface (410) du côté du boîtier présentant une bride annulaire (412) qui est connectée de manière solidaire en rotation au boîtier de transmission (320), et correspondant à un élément d'interface (420) du côté de la pièce d'outil, qui présente une bague de fixation (422) qui est supportée de manière rotative sur la pièce d'outil (340),
la bague de fixation (422) devant être amenée en prise avec la bride annulaire (412) par un mouvement relatif axial et de rotation accouplé de la bague de fixation (422) par rapport à la bride annulaire (412) de telle sorte que la bague de fixation (422) et la bride annulaire (412) forment ensemble un dispositif de connexion à baïonnette (405), **caractérisée en ce que**
la bride annulaire (412) présentant au moins une contre-dépouille biseautée (416) qui s'étend dans la direction périphérique de la bride annulaire (412) et qui présente un pas variable, au moins un élément d'engagement par l'arrière correspondant (423) s'engageant au niveau de la bague de fixation (422) à la manière d'une connexion à baïonnette dans la contre-dépouille (416) lors de la fabrication du dispositif de connexion à baïonnette (405), l'élément d'engagement par l'arrière (423) étant guidé le long du pas de la contre-dépouille biseautée (416) lors de l'application d'une rotation à la bague de fixation (422) de manière à provoquer, dans une première plage angulaire définie de la rotation, une composante de déplacement axiale de la bague de fixation (422) par rapport à la bride annulaire (412) .

2. Machine-outil portative selon la revendication 1, **caractérisée en ce que** l'élément d'interface (420) du côté de la pièce d'outil comprend en outre une bague d'encliquetage (430), le dispositif de connexion à baïonnette (405) pouvant être bloqué par une rotation de la bague de fixation (422) par rapport à la bague d'encliquetage (430).

3. Machine-outil portative (300) selon l'une quelconque des revendications 1 ou 2, **caractérisée en ce que** la bague de fixation (422) présente au moins une deuxième contre-dépouille biseautée qui s'étend dans la direction périphérique de la bague de fixation (422) et qui présente un pas variable, au moins un deuxième élément d'engagement par l'arrière s'engageant au niveau de la bride annulaire (412) dans la deuxième contre-dépouille à la manière d'une connexion à baïonnette lors de la fabrication du dispositif de connexion à baïonnette (405), le deuxième élément d'engagement par l'arrière étant guidé le long du pas de la deuxième contre-dépouille biseautée lors d'une application d'une rotation de la bague de fixation (422), de manière à provoquer, dans une première plage angulaire définie de la rotation, une composante de déplacement axiale de la bague de fixation (422) par rapport à la bride annulaire (412).

4. Machine-outil portative (300) selon l'une quelconque des revendications 1 à 3, **caractérisée en ce que** le pas variable de la contre-dépouille biseautée (416) est réalisé de telle sorte que la rotation appliquée à la bague de fixation (422) dans une deuxième plage angulaire définie de la rotation ne génère pas de composante de déplacement axiale de la bague de fixation (422) par rapport à la bride annulaire (412).

5. Machine-outil portative (300) selon l'une quelconque des revendications 2 à 4, **caractérisée en ce qu'**à la fois la bague d'encliquetage (430) et la bague de fixation (422) sont supportées de manière rotative sur la pièce d'outil (340), et **en ce que** l'élément d'interface (410) du côté du boîtier présente au moins un élément de fixation (425) qui fixe de manière solidaire en rotation la bague d'encliquetage (430) par rapport à la bride annulaire (412) lors de l'engagement de la bague de fixation (422) avec la bride annulaire (412).

6. Machine-outil portative (300) selon l'une quelconque des revendications 2 à 5, **caractérisée en ce que** la bague d'encliquetage (430) présente au moins un premier évidement (432) qui coopère avec au moins un élément d'encliquetage correspondant (424) de la bague de fixation (422) de telle sorte que lors de la fabrication du dispositif de connexion à baïonnette (405), l'élément d'encliquetage (424) s'encliquète dans le premier évidement (432) dans le cas d'un angle de rotation défini de la bague de fixation (422) par rapport à la bague d'encliquetage (430), de sorte que la bague de fixation (422) soit bloquée par rapport à la bague d'encliquetage (430).

7. Machine-outil portative (300) selon les revendications 1 à 6, **caractérisée en ce que** la bague d'encliquetage (430) présente au moins un deuxième évidement (434) qui coopère avec au moins un élément d'encliquetage (424) de la bague de fixation (422) de telle sorte que lors du desserrage du dispositif de connexion à baïonnette (405), l'élément d'encliquetage (424) s'encliquète dans le deuxième évidement (434) dans le cas d'un angle de rotation défini de la bague de fixation (22) par rapport à la bague d'encliquetage (430), de sorte qu'une fixation en rotation de la bague de fixation (422) par rapport à la bague d'encliquetage (430) sont obtenue lorsque l'élément d'interface (410) du côté du boîtier et l'élément d'interface (420) du côté de la tête d'outil ne sont pas en prise l'un avec l'autre.

8. Machine-outil portative (300) selon la revendication 7, **caractérisée en ce que** la deuxième plage angulaire définie de la rotation correspond à une plage qui s'étend depuis l'encliquetage de l'élément d'encliquetage (424) dans le premier évidement (432) jusqu'à une rotation de la bague de fixation (422) par rapport à la bague d'encliquetage (430) suivant un angle de rotation défini, et la première plage angulaire définie de la rotation correspond au reste de l'angle de rotation de la bague de fixation (422) par rapport à la bague d'encliquetage (430) jusqu'à l'encliquetage de l'élément d'encliquetage (424) dans le deuxième évidement (434).

9. Machine-outil portative (300) selon l'une quelconque des revendications 1 à 8, **caractérisée en ce que** l'élément d'interface (410) du côté du boîtier présente au moins un élément de nervure (414) qui peut être amené en prise avec au moins un ergot d'encliquetage correspondant de l'élément d'interface (420) du côté de la pièce d'outil, de telle sorte que lors de la fabrication du dispositif de connexion à baïonnette (405), la pièce d'outil (340) soit fixée de manière solidaire en rotation par rapport au boîtier de transmission (320).

10. Pièce d'outil (340) pour la connexion interchangeable à une machine-outil portative (300), comprenant un élément d'interface (420) du côté de la pièce d'outil, qui peut être connecté de manière interchangeable à un élément d'interface (410) du côté du boîtier,
l'élément d'interface (420) du côté de la pièce d'outil présentant une bague de fixation (422) qui est supportée de manière rotative sur la pièce d'outil (340),
la bague de fixation (422) pouvant être amenée en prise avec l'élément d'interface (410) du côté du boîtier par un mouvement relatif de rotation et axial accouplé de la bague de fixation (422) par rapport à l'élément d'interface (410) du côté du boîtier de telle sorte que la bague de fixation (422) et l'élément d'interface (410) du côté du boîtier forment ensemble un dispositif de connexion à baïonnette (405),
**caractérisée en ce que** la bague de fixation (422) présente au moins une contre-dépouille biseautée qui s'étend dans la direction périphérique de la bague de fixation (422) et qui présente un pas variable, au moins un élément d'engagement par l'arrière correspondant au niveau d'une bride annulaire (412) de l'élément d'interface (410) du côté du boîtier s'engageant à la manière d'une connexion à baïonnette dans la contre-dépouille lors de la fabrication du dispositif de connexion à baïonnette, l'élément d'engagement par l'arrière correspondant, lors d'une application d'une rotation de la bague de fixation (422), étant guidé le long du pas de la contre-dépouille biseautée de manière à provoquer, dans une première plage angulaire définie de rotation, une composante de déplacement axiale de la bague de fixation (422) par rapport à la bride annulaire (412).

11. Pièce d'outil (340) selon la revendication 10, **caractérisée en ce que** l'élément d'interface (420) du côté de la pièce d'outil comprend en outre une bague d'encliquetage (430), le dispositif de connexion à baïonnette (405) pouvant être bloqué par une rotation de la bague de fixation (422) par rapport à la bague d'encliquetage (430).

12. Pièce d'outil (340) selon l'une quelconque des revendications 10 ou 11, **caractérisée en ce que** la rotation de la bague de fixation (422) s'effectue par le biais d'une bague de réglage (426) qui est supportée concentriquement par rapport à la bague de fixation (422) sur la pièce d'outil (340) et qui est connectée de manière solidaire en rotation à la bague de fixation (422).

13. Pièce d'outil (340) selon l'une quelconque des revendications 10 à 12, **caractérisée en ce que** la bague de fixation (422) est supportée de manière élastique à ressort dans la direction axiale sur la pièce d'outil (340) de telle sorte que lors de la fabrication du dispositif de connexion à baïonnette (405) et du mouvement relatif axial qui y est associé entre la bague de fixation (422) et la bride annulaire (412), l'élément d'interface (410) du côté du boîtier et l'élément d'interface (420) du côté de l'outil soient précontraints axialement l'un contre l'autre.

14. Pièce d'outil (340) selon la revendication 13, **caractérisée en ce que** le support élastique à ressort est produit par un élément en élastomère (342) et/ou un ressort (344).

15. Pièce d'outil (340) selon l'une quelconque des revendications 10 à 14, **caractérisée en ce qu'**un ergot d'encliquetage (418) de l'élément d'interface (420) du côté de la pièce d'outil est connecté par un élément de ressort (428) à la bague de fixation (422) de manière à obtenir une précontrainte de l'ergot d'encliquetage (418) contre l'élément d'interface (410) du côté du boîtier.

16. Pièce d'outil (340) selon la revendication 15, **caractérisée en ce que** l'élément de ressort (428) est un ressort spiral qui est réalisé sous la forme de ressort de compression ou de traction.

17. Pièce d'outil (340) selon l'une quelconque des revendications 10 à 16, **caractérisée en ce que** la pièce d'outil (340) est réalisée sous forme de porte-outil de mandrin de serrage, de porte-outil à angle droit, de porte-outil excentrique, de pièce de porte-embouts, de pièce hélico-percutante, de pièce de perçage à percussion, de pièce de marteau perforateur ou de pièce dynamométrique.

18. Pièce d'outil (340) selon l'une quelconque des revendications 10 à 17, **caractérisée en ce qu'**un dispositif d'affichage (346) est prévu sur la pièce d'outil (340), lequel, indépendamment de la pièce d'outil utilisée (340), indépendamment de la position angulaire de la pièce d'outil (340) par rapport au boîtier de transmission (320), et indépendamment de la position angulaire du dispositif d'affichage (346) de la pièce d'outil (340) par rapport au reste de la pièce d'outil (340), indique l'état de verrouillage déverrouillé et verrouillé du dispositif de connexion à baïonnette (405).

19. Pièce d'outil (340) selon la revendication 18, **caractérisée en ce que** le dispositif d'affichage (346) comprend un premier évidement d'affichage (348) et un deuxième évidement d'affichage (349) dans la bague de réglage (426) ainsi qu'un premier symbole (436) sur la bague d'encliquetage (430), qui est exclusivement visible en position centrée par le premier évidement d'affichage (348) lorsque l'élément d'encliquetage (424) de la bague de fixation (422) est encliqueté dans le premier évidement (432) et qui est exclusivement visible en position centrée par le deuxième évidement d'affichage (349) lorsque l'élément d'encliquetage (424) de la bague de fixation (422) est encliqueté dans le deuxième évidement (434).

20. Pièce d'outil (340) selon la revendication 18, **caractérisée en ce que** le dispositif d'affichage (346) comprend un premier évidement d'affichage (438) dans la bague de réglage (426) ainsi qu'un premier symbole (436) et un deuxième symbole (437) sur la bague d'encliquetage (430), le premier symbole (436) étant exclusivement visible en position centrée par le premier évidement d'affichage (348) lorsque l'élément d'encliquetage (424) de la bague de fixation (422) est encliqueté dans le premier évidement (432), et le deuxième symbole (437) étant exclusivement visible en position centrée par le premier évidement d'affichage (348) lorsque l'élément d'encliquetage (424) de la bague de fixation (422) est encliqueté dans le deuxième évidement (434).

21. Pièce d'outil (340) selon l'une quelconque des revendications 10 à 20, **caractérisée en ce que** la pièce d'outil (340) comprend en plus de l'élément d'interface (420) du côté de la pièce d'outil, également une interface supplémentaire (360) réalisée à la manière de l'élément d'interface (410) du côté du boîier de la machine-outil portative de telle sorte qu'une pièce d'outil supplémentaire (341) puisse être adaptée à l'interface supplémentaire (360) et que le fonctionnement de plusieurs pièces d'outil disposées les unes derrière les autres (340, 341) sur le boîtier de transmission (320) soit ainsi possible, lesquelles pièces d'outil sont connectées les unes aux autres par des dispositifs de connexion à baïonnette (405).

22. Pièce d'outil (340) selon l'une quelconque des revendications 10 à 21, **caractérisée en ce qu'**il est en outre prévu une douille de palier d'entrée (216) sur la pièce d'outil (340), la douille de palier d'entrée (216) recevant, au niveau de sa périphérie intérieure, la broche d'entrée (212) de la pièce d'outil (340) et étant saisie sur son pourtour le long de sa périphérie extérieure en partie à la fois par une douille de centrage (218) de la broche d'entrée (212) et par des portions du boîtier de la pièce d'outil (340), de manière à obtenir un centrage simultané du boîtier de la pièce d'outil (340) et de l'interface (400) par la douille de palier d'entrée (216).

23. Système d'outil comprenant une machine-outil portative (300) selon l'une quelconque des revendications 1 à 9 et une pièce d'outil (340) selon l'une quelconque des revendications 10 à 22, la machine-outil portative (300) pouvant être connectée de manière interchangeable avec la pièce d'outil (340) par le biais d'une interface (400).

24. Système d'outil selon la revendication 23, **caractérisé en ce que** la machine-outil portative (300) comprend un boîtier de transmission (320) avec une transmission (200) pour le transfert d'un couple généré par un moteur d'entraînement à une broche (210) tournant autour d'un axe de rotation (x), la broche (210) définissant une direction axiale (x),
le boîtier de transmission (320) pouvant être connecté de manière interchangeable à la pièce d'outil (340) par le biais d'une interface (400), de telle sorte qu'un couple soit transmis de la broche (210) à une broche d'entrée (212) de la pièce d'outil (340),
l'interface (400) présentant un élément d'interface (410) du côté du boîtier avec une bride annulaire (412), la bride annulaire (412) étant connectée de manière solidaire en rotation au boîtier de transmission (320), et l'élément d'interface (410) du côté du boîtier correspondant à un élément d'interface (420) du côté de la pièce d'outil qui présente une bague de fixation (422) qui est supportée de manière rotative sur la pièce d'outil (340),
la bague de fixation (422) pouvant être amenée en prise avec la bride annulaire (412) par un mouvement relatif de rotation et axial accouplé de la bague de fixation (422) par rapport à la bride annulaire (412) de telle sorte que la bague de fixation (422) et la bride annulaire (412) forment ensemble un dispositif de connexion à baïonnette (405).

25. Système d'outil selon la revendication 24, **caractérisé en ce que** l'élément d'interface (420) du côté de la pièce d'outil comprend en outre une bague d'encliquetage (430), le dispositif de connexion à baïonnette (405) pouvant être bloqué par rapport à la bague d'encliquetage (430) par une rotation de la bague de fixation (422).

26. Système d'outil selon l'une quelconque des revendications 24 ou 25, **caractérisé en ce que** l'élément d'interface (410) du côté du boîtier présente au moins un élément de nervure (414) qui peut être amené en prise avec au moins un ergot d'encliquetage correspondant (418) de l'élément d'interface (420) du côté de la pièce d'outil, de telle sorte que lors de la fabrication du dispositif de connexion à baïonnette (405), la pièce d'outil (340) soit fixée de manière solidaire en rotation par rapport au boîtier de transmission (320).

27. Système d'outil selon la revendication 26, **caractérisé en ce que** la pièce d'outil (340), dans l'état bloqué du dispositif de connexion à baïonnette (405), peut être retirée du boîtier de transmission (320) dans la direction axiale (x) à l'encontre de la force de précontrainte d'un élément de ressort (428), de telle sorte que l'engagement entre l'ergot d'encliquetage (418) et l'élément de nervure (414) soit supprimé et qu'une rotation de la pièce d'outil (340) par rapport au boîtier de transmission (320) soit possible.
